# FASCICULE DE BREVET EUROPEEN

(11) **EP 4 603 232 B1**
(45) Date de publication et mention de la délivrance du brevet: **28.10.2026**
(21) Numéro de dépôt: 25178477.3
(22) Date de dépôt: 14.09.2022
(51) Int. Cl.: B25J 5/00

(54) **NOUVELLE ARCHITECTURE DE SYSTÈME ROBOTISÉ MOBILE**
NEUARTIGE ARCHITEKTUR EINES MOBILEN ROBOTERSYSTEMS
NOVEL MOBILE ROBOT SYSTEM ARCHITECTURE

(30) Priorité: 15.09.2021 FR 2109688
(43) Date de publication de la demande: 20.08.2025
(62) Numéro(s) de document de la (des) demande(s) initiale(s) en application de l'article 76 CBE: 22789195.9 / 4 401 926
(73) Titulaire: NIO ROBOTICS, 31000 TOULOUSE (FR)
(72) Inventeur: LE MAREC, Titouan, 31420 ALAN (FR)
(74) Mandataire: Santarelli

(56) Documents cités:
- CN-A- 103 303 385
- CN-A- 105 619 396
- CN-A- 107 878 589
- CN-Y- 2 695 188

## Description

### Domaine technique de l'invention

L'invention concerne une nouvelle architecture de système robotisé mobile.

### Technique antérieure

Les performances d'un robot mobile sont définies principalement par son architecture et l'algorithmique embarquée. Ces deux composantes sont liées, mais les capacités d'un robot mobile sont principalement définies et limitées par son architecture tandis que l'algorithmique embarquée permet d'exploiter les capacités du mieux possible, sans les étendre.

Parmi les architectures robotiques actuelles à haute mobilité, on peut citer par exemple les robots bipèdes, naturellement adaptés aux environnements humains, par mimétisme avec l'architecture humaine. La forme de ces architectures évolue peu et les améliorations se focalisent principalement sur l'algorithmique de contrôle. Un des principaux inconvénients de ces robots bipèdes repose sur leur centre de gravité élevé et donc leur faible marge de stabilité, ce qui rend ces robots relativement difficiles à déployer sur le terrain.

On peut également citer les robots multi-jambes, tels que les quadrupèdes, ou encore les véhicules (communément appelés rovers) articulés. Ces robots multi-jambes se présentent généralement sous la forme d'une base centrale, à partir de laquelle s'étendent plusieurs jambes articulées. La base centrale permet d'accueillir l'ensemble des capteurs, batterie et microcontrôleurs de ces robots. Ces robots présentent l'avantage, par rapport aux robots bipèdes, d'avoir une plus grande liberté de placement des jambes. De plus, il est possible d'installer des manipulateurs sur ces robots soit au niveau des jambes, soit au niveau de la base centrale. Cependant, la base centrale est la principale source de limitation de ces robots multi-jambes car elle impacte la mobilité du robot. En effet, la base centrale étant inerte, une trajectoire n'est empruntable par un robot multi-jambes que si sa base centrale peut éviter les obstacles se trouvant sur ladite trajectoire. Ainsi, seuls les robots multi-jambes avec une base centrale élevée peuvent traverser un terrain rocailleux. Or, une base centrale élevée réduit la stabilité du robot car celle-ci concentre la majorité de la masse et élève le centre de gravité.

Les documents CN 103303385 et CN 105619396 décrivent des exemples d'architectures de systèmes robotisés comportant des structures articulées deux à deux en série, formant une boucle.

### Présentation de l'invention

La présente invention vise à remédier aux inconvénients précités et propose une nouvelle architecture de système robotisé.

A cet effet, l'invention porte sur un système robotisé mobile, apte à se déplacer, comportant N structures articulées reliées entre elles deux à deux en série de sorte à former une boucle, N étant un nombre entier positif supérieur ou égal à 3. Chaque structure articulée, dénommée quadrant, comporte :
- au moins deux membres successifs, dont un premier membre dit torse, et un dernier membre ; deux membres successifs du quadrant étant reliés entre eux par une articulation autorisant au moins une rotation autour d'un axe, et
- une articulation, dite articulation fin de quadrant.

L'articulation fin de quadrant d'un quadrant relie le dernier membre dudit quadrant au torse du quadrant suivant.

Au moins un quadrant du système robotisé comporte au moins quatre membres successifs, dont :
- le torse,
- un deuxième membre, dit épaule, lié audit torse par une articulation, dite première articulation, autorisant une rotation autour d'un axe dit premier axe,
- un troisième membre, dit bras, lié à ladite épaule par une articulation, dite deuxième articulation, autorisant une rotation autour d'un axe dit deuxième axe, le deuxième axe étant orthogonal audit premier axe,
- un quatrième membre, dit avant-bras, lié audit bras par une articulation, dite troisième articulation, autorisant une rotation autour d'un axe dit troisième axe, ledit troisième axe étant parallèle audit deuxième axe.

Le système robotisé comporte des moyens d'actionnement configurés pour mettre en mouvement tout ou partie des articulations des quadrants.

Selon l'invention, les moyens d'actionnement comportent, pour chacune des articulations constituant le système robotisé, un moteur associé.

L'invention propose ainsi avantageusement un système robotisé dont l'architecture est composée de quadrants articulés deux à deux.

Le système robotisé, permet de positionner les quadrants dans l'espace pour pouvoir marcher, rouler, s'adapter au terrain sur lequel évolue le système robotisé. Un tel système robotisé permet avantageusement d'augmenter la mobilité du système robotisé, face aux obstacles du terrain.

Le système robotisé comporte au minimum trois quadrants pour garantir avantageusement la stabilité statique dudit système robotisé sur le terrain. Un système robotisé à trois quadrants est isostatique sur tout terrain. Un système à quatre quadrants permet l'utilisation d'un des torses comme manipulateur alors que les trois autres garantissent un contact isostatique avec le sol.

De préférence, chaque quadrant d'un système robotisé comporte le même nombre de membres. Cependant, rien n'empêche de proposer un système robotisé avec des quadrants présentant un nombre différent de membres.

Selon des modes de réalisation particuliers, le système robotisé selon l'invention répond en outre aux caractéristiques suivantes, mises en œuvre séparément ou en chacune de leurs combinaisons techniquement opérantes.

Dans des modes de réalisation préférés de l'invention, le système robotisé ne comporte pas de corps central sur lequel viennent se relier chaque quadrant.

Le système robotisé présente une architecture consistant en des quadrants articulés deux à deux. Le système robotisé, dépourvue de corps central, propose ainsi une architecture organisée uniquement autour d'une boucle cinématique principale.

Le système robotisé se comporte avantageusement comme un robot multi-jambes bien que composé uniquement de multiples quadrants connectés chacun à ses deux voisins immédiats.

L'absence de corps central confère des propriétés mécaniques intéressantes, que ce soient :
- en termes de mobilité et de stabilité, le centre de gravité du système robotisé est naturellement bas.
- en termes de mobilité et de garde au sol : le système robotisé étant dépourvu de corps central, la garde au sol (c'est-à-dire la mesure de la capacité d'un véhicule à franchir un obstacle) est infinie et la configuration du système robotisé peut être adaptée à tout type de terrain ; les zones rocailleuses tout comme les zones étroites sont accessibles.
- en termes de résistance au renversement.

Suivant l'invention, le système robotisé comporte des moyens d'actionnement configurés pour mettre en mouvement tout ou partie des articulations des quadrants. La boucle cinématique formée par les quadrants successifs reliés entre eux introduit des contraintes de mouvement dans le système robotisé. Ces contraintes de mouvement permettent avantageusement de mouvoir la totalité des articulations du système robotisé alors que seul un sous-ensemble bien choisi des articulations est équipé de moyens d'actionnement. Alternativement, lorsque les moyens d'actionnement du système robotisé actionnent la totalité des articulations des quadrant, une redondance est introduite dans l'actionnement du système robotisé ce qui rend avantageusement le système robotisé robuste, notamment suite à la perte d'un ou de plusieurs moyens d'actionnement.

Dans des modes de réalisation préférés de l'invention, au moins un quadrant du système robotisé comporte une pièce d'appui destinée à venir en contact avec une surface d'appui. De préférence, tous les quadrants du système robotisé comportent une pièce d'appui.

Dans un exemple de réalisation, une pièce d'appui peut être un pied, une roue.

Dans des modes de réalisation préférés de l'invention, le système robotisé comporte au moins un dispositif de verrouillage/déverrouillage configuré pour désolidariser de manière réversible deux quadrants successifs. Un quadrant désolidarisé d'un de ses voisins possède avantageusement une zone de mouvement accessible bien plus étendue. Ainsi, le quadrant peut par exemple aller interagir avec un objet plus éloigné. Le système robotisé peut également prendre une forme rectiligne, par exemple pour négocier des tunnels étroits.

Dans des modes de réalisation préférés de l'invention, le système robotisé comporte, au niveau d'au moins un quadrant, un connecteur relié, de manière réversible ou non, à un des membres dudit quadrant, et configuré pour recevoir au moins un outil. Le système robotisé peut être équipé d'un outil spécifique tel que par exemple un aspirateur, une pince...

Dans des versions de réalisation préférées de l'invention, au moins un quadrant du système robotisé, autre que le quadrant à au moins quatre membres successifs, comporte au moins trois membres successifs, dont :
- le torse,
- l'épaule, liée audit torse par la première articulation,
- le bras, lié à ladite épaule par la deuxième articulation.

Dans une telle configuration, les deux articulations reproduisent avantageusement le mouvement typique de l'ensemble épaule/bras d'un corps humain.

Dans des modes de réalisation préférés de l'invention, lorsqu'un autre quadrant, autre que le quadrant à au moins quatre membres successifs, comporte uniquement trois membres successifs, le bras est le dernier membre et l'articulation fin de quadrant dudit quadrant est préférentiellement une liaison rotule. La liaison rotule permet avantageusement de réaliser une grande diversité de mouvement et est aisément réalisable mécaniquement.

Préférentiellement, l'articulation fin de quadrant dudit quadrant à quatre membres successifs autorise une rotation autour d'un axe dit axe de rotation. Ledit axe de rotation est parallèle au deuxième axe et au troisième axe. Dans des formes de réalisation préférées, l'articulation fin de quadrant du quadrant à quatre membres successifs :
- est une liaison pivot liant le dernier membre dudit quadrant à quatre membres successifs et le torse du quadrant suivant, ou
- comporte une pièce auxiliaire, dite pré-torse, liée d'une part au dernier membre dudit quadrant à quatre membres successifs par une liaison pivot autorisant une rotation autour de l'axe de rotation et d'autre part au torse du quadrant suivant par une liaison sans degré de liberté.

Dans des exemples de réalisation préférées, lorsqu'une articulation fin de quadrant d'un quadrant à quatre membres successifs comporte un pré-torse, ledit quadrant et le quadrant suivant sont configurés pour pouvoir être désolidarisés de manière réversible, au niveau de la liaison sans degré de liberté reliant le pré-torse au torse dudit quadrant suivant.

Dans des modes de réalisation préférés de l'invention, lorsque le quadrant comporte uniquement quatre membres successifs, l'avant-bras est le dernier membre dudit quadrant, et l'axe de rotation est parallèle au deuxième axe et au troisième axe.

La deuxième articulation, la troisième articulation et l'articulation fin de quadrant d'un quadrant forment ainsi avantageusement un mécanisme de type RRR : trois rotations successives d'axes parallèles. Un tel mécanisme est connu en soi et aisément réalisable mécaniquement.

Dans des modes de réalisation préférés de l'invention, ledit au moins un quadrant à au moins quatre membres successifs comporte cinq membres successifs, dont :
- le torse,
- l'épaule, liée audit torse par la première articulation,
- le bras, lié à ladite épaule par la deuxième articulation,
- l'avant-bras, lié audit bras par la troisième articulation,
- un cinquième et dernier membre, dit poignet, lié à l'avant-bras par une articulation, dite quatrième articulation.

Dans des formes de réalisation préférées, la troisième articulation autorise une rotation autour d'un axe dit troisième axe, ledit troisième axe étant parallèle audit deuxième axe, et la quatrième articulation autorisant une rotation autour d'un axe dit quatrième axe, ledit quatrième axe étant parallèle audit deuxième axe et audit troisième axe.

Dans des formes de réalisation préférées, l'articulation fin de quadrant dudit quadrant à cinq membres successifs autorise une rotation autour d'un axe dit axe de rotation. Préférentiellement, l'axe de rotation de l'articulation fin de quadrant dudit quadrant à cinq membres successifs est parallèle au premier axe de la première articulation du quadrant suivant.

Dans des versions de réalisation préférées de l'invention, au moins un quadrant du système robotisé comporte au moins cinq membres successifs, dont :
- le torse,
- l'épaule, liée audit torse par la première articulation,
- le bras, lié à ladite épaule par la deuxième articulation,
- l'avant-bras, lié audit bras par la troisième articulation,
- un cinquième membre, dit poignet, lié à l'avant-bras par une articulation, dite quatrième articulation.

L'ajout d'un membre permet avantageusement d'augmenter la zone de mouvement accessible du dernier membre du quadrant par rapport au premier membre du quadrant.

Dans des modes de réalisation préférés de l'invention, la première articulation du quadrant autorise une rotation autour d'un axe dit premier axe, la deuxième articulation du quadrant autorise une rotation autour d'un axe dit deuxième axe, la troisième articulation autorise une rotation autour d'un axe dit troisième axe et la quatrième articulation autorisant une rotation autour d'un axe dit quatrième axe. Le deuxième axe est orthogonal audit premier axe, le troisième axe est parallèle audit deuxième axe, et le quatrième axe est parallèle audit deuxième axe et audit troisième axe.

Dans des modes de réalisation préférés de l'invention, l'articulation fin de quadrant dudit quadrant autorise une rotation autour d'un axe dit axe de rotation.

Dans des modes de réalisation préférés de l'invention, l'axe de rotation de l'articulation fin de quadrant dudit quadrant est parallèle au premier axe de la première articulation du quadrant suivant.

Les première et deuxième articulations d'un tel quadrant reproduisent ainsi avantageusement le mouvement typique de l'ensemble épaule/bras d'un corps humain. Les deuxième troisième et quatrième articulations forment quant à elles avantageusement un mécanisme de type RRR, connu en soi et aisément réalisable mécaniquement.

Dans des versions de réalisation préférées de l'invention, au moins un quadrant du système robotisé comporte au moins au moins six membres successifs, dont :
- le torse,
- l'épaule, liée audit torse par la première articulation,
- le bras, lié à ladite épaule par la deuxième articulation,
- l'avant-bras, lié audit bras par la troisième articulation,
- un cinquième membre, dit poignet, lié à l'avant-bras par une articulation, dite quatrième articulation,
- un sixième membre, dit main, lié au poignet par une articulation, dite cinquième articulation.

L'ajout d'un membre audit au moins un quadrant permet avantageusement d'augmenter la zone de mouvement accessible du dernier membre par rapport au premier membre. De plus, ledit au moins un quadrant comporte six articulations, en comptant l'articulation fin de quadrant. Dans une telle configuration, en réduisant chaque articulation à une liaison pivot, ledit au moins un quadrant présente tout de même avantageusement six degrés de liberté, six degrés de liberté étant le nombre de degrés minimal pour permettre une complète liberté de positionnement dans l'espace en trois dimensions. Une liaison pivot étant la liaison la plus simple à réaliser, le système robotisé peut être aisément réalisable mécaniquement.

### Brève description des figures

L'invention sera mieux comprise à la lecture de la description suivante, donnée à titre d'exemple nullement limitatif, et faite en se référant aux figures suivantes :
[Fig. 1] représente une première configuration d'un quadrant d'un système robotisé selon l'invention, comprenant deux membres ;
[Fig. 2] illustre un exemple schématisé d'un système robotisé, ne relevant pas de l'invention, comprenant trois quadrants selon la figure 1 ;
[Fig. 3] représente une deuxième configuration d'un quadrant d'un système robotisé selon l'invention, comprenant trois membres ;
[Fig. 4] illustre un exemple schématisé d'un système robotisé, ne relevant pas de l'invention, comprenant trois quadrants selon la figure 3 ;
[Fig. 5] représente une troisième configuration d'un quadrant d'un système robotisé selon l'invention, comprenant quatre membres ;
[Fig. 6] illustre un exemple schématisé d'un système robotisé comprenant quatre quadrants selon la figure 5 ;
[Fig. 7] représente un exemple schématisé des moyens d'actionnement selon un premier mode de réalisation, ne relevant pas de l'invention, pour un ensemble « quadrant - articulation fin de quadrant le liant au quadrant suivant » ;
[Fig. 8] représente un exemple des moyens d'actionnement selon un deuxième mode de réalisation, ne relevant pas de l'invention, pour un ensemble « quadrant - articulation fin de quadrant le liant au quadrant suivant » ;
[Fig. 9] illustre une vue en perspective d'un exemple de forme de réalisation des membres d'un quadrant ;
[Fig. 10] illustre une vue en perspective d'un exemple d'agencement des membres pour deux quadrants successifs ;
[Fig. 11] illustre une vue en perspective d'un autre exemple de forme de réalisation des membres d'un quadrant ;
[Fig. 12] illustre un autre exemple d'un système robotisé comprenant quatre quadrants selon la troisième configuration ;
[Fig. 13] illustre un exemple de réalisation d'un quadrant du système robotisé de la figure 12 ;
[Fig. 14] représente une vue en éclaté du quadrant de la figure 13 ;
[Fig. 15] représente un agrandissement de l'ensemble torse-épaule du quadrant de la figure 13 ;
[Fig. 16] représente deux vues en éclaté de l'ensemble torse-épaule de la figure 15 ;
[Fig. 17] représente une variante de réalisation de l'ensemble torse-épaule du quadrant de la figure 13 ;
[Fig. 18] représente deux vues en éclaté de l'ensemble torse-épaule de la figure 17 ;
[Fig. 19] représente une vue en perspective du bras d'un quadrant de la figure 13 ;
[Fig. 20] représente une autre vue en perspective du bras d'un quadrant de la figure 13 ;
[Fig. 21] représente une vue en perspective de l'avant-bras d'un quadrant de la figure 13 ;
[Fig. 22] représente une autre vue en perspective de l'avant-bras d'un quadrant de la figure 13 ;
[Fig. 23] illustre un exemple de système de verrouillage/déverrouillage pour la désolidarisation du premier quadrant d'avec le deuxième quadrant ;
[Fig. 24] représente une vue en éclaté du système de verrouillage/déverrouillage de la figure 23 ;
[Fig. 25] illustre un ensemble torse-épaule équipé d'un ensemble roue ;
[Fig. 26] représente une vue en éclaté de l'ensemble torse-épaule équipé d'un ensemble roue de la figure 25 ;
[Fig. 27] représente une vue en éclaté d'une partie de l'ensemble roue de la figure 26 ;
[Fig. 28] représente une quatrième configuration d'un quadrant d'un système robotisé selon l'invention, comprenant cinq membres ;
[Fig. 29] illustre un exemple schématisé d'un système robotisé comprenant quatre quadrants selon la figure 28 ;

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

Dans la description qui va suivre, certains éléments seront désignés, à des fins de clarté, par des termes correspondants au corps humain, ces éléments jouant des fonctions sensiblement équivalentes.

Un système robotisé 100 selon l'invention est préférentiellement un système robotisé mobile, de type marcheur. Le système robotisé 100 est apte et destiné à se déplacer sur tout type de terrain, même rocailleux. Le système robotisé est configuré pour se déplacer par ses propres moyens. Le système robotisé 100 n'est avantageusement pas fixé solidairement à une quelconque surface d'appui, que ce soit par exemple le sol ou une table.

Le système robotisé 100 selon l'invention comporte N structures articulées Q reliées entre elles deux à deux en série. N est un nombre entier positif supérieur ou égal à 3.

En d'autres termes, le système robotisé 100 est tel que l'ensemble des N structures articulées Q forme une boucle fermée.

De préférence, le système robotisé 100 est formé uniquement par les N structures articulées. Contrairement aux systèmes robotisés de type marcheurs existants, le système robotisé selon l'invention ne comporte aucun corps central sur lequel viennent se rattacher les structures articulées Q.

Dans la suite de la description, on dénommera une structure articulée, un quadrant Q.

Un nombre minimal de trois quadrants Q est nécessaire pour garantir au système robotisé 100 sa stabilité statique sur tout type de terrain.

Chaque quadrant Q du système robotisé 100 comporte au moins deux membres successifs. Parmi ces au moins deux membres successifs se trouve un premier membre, dit torse T, et un dernier membre. Deux membres successifs sont reliés entre eux par une articulation autorisant au moins une rotation autour d'un axe.

Chaque quadrant Q comporte en outre une articulation dite fin de quadrant.

De préférence, les au moins deux membres sont réalisés dans un matériau rigide, tel que par exemple un matériau en plastique, en aluminium, en acier inoxydable ou une combinaison de matériau.

Dans un mode de réalisation, le système robotisé selon l'invention comporte des moyens d'actionnement configurés pour mettre en mouvement tout ou partie des articulations des quadrants. Préférentiellement, les moyens d'actionnement sont configurés pour mettre en mouvement l'ensemble des articulations des quadrants.

Dans un mode de réalisation des moyens d'actionnement, ne relevant pas de l'invention, lesdits moyens d'actionnement comportent, pour une partie des articulations des quadrants du système robotisé, un moteur associé. En d'autres termes, le système robotisé comporte moins de moteurs que d'articulations.

Dans un mode préféré de réalisation des moyens d'actionnement, lesdits moyens d'actionnement comportent, pour chacune des articulations des quadrants du système robotisé, un moteur associé. En d'autres termes, le système robotisé comporte autant de moteurs que d'articulations. Dans un mode de réalisation, au moins un quadrant du système robotisé 100 comporte au moins une pièce d'appui PA destinée à venir en contact avec une surface d'appui, tel que par exemple le sol. La pièce d'appui est liée à un des au moins deux membres du quadrant, préférentiellement au torse T du quadrant.

Préférentiellement, chaque quadrant Q du système robotisé 100 comporte au moins une pièce d'appui PA.

Dans un exemple de réalisation, la pièce d'appui comporte un pied. Le pied est destiné à être lié fixement à un des au moins deux membres du quadrant. Par « lié fixement », on entend qu'il n'existe aucun degré de liberté entre le pied et le membre du quadrant auquel il est lié.

Dans un autre exemple de réalisation de la pièce d'appui, la pièce d'appui PA comporte une roue. La roue est reliée à un des au moins deux membres du quadrant, préférentiellement au torse T du quadrant Q, par une articulation autorisant un ou deux degrés de liberté.

Des exemples de réalisation d'une pièce d'appui seront décrits ultérieurement.

Dans un mode de réalisation (non représenté sur les figures), le système robotisé 100 comporte au moins un dispositif de verrouillage/déverrouillage configuré pour désolidariser, de manière réversible, deux quadrants successifs. En d'autres termes, la boucle fermée formée par les quadrants du système robotisé peut être ouverte et refermée.

De préférence, le système robotisé 100 comporte autant de dispositifs de verrouillage/déverrouillage que de quadrants, ce qui permet avantageusement de désolidariser n'importe quel quadrant du système robotisé, selon le besoin.

Un dispositif de verrouillage/déverrouillage comporte préférentiellement un premier organe de fixation configuré pour coopérer de manière amovible avec un deuxième élément de fixation. Le premier organe de fixation est préférentiellement disposé au niveau d'un des deux quadrants successifs et le second organe de fixation est disposé au niveau de l'autre quadrant.

De préférence, un dispositif de verrouillage/déverrouillage permet de désassembler l'articulation fin de quadrant d'un quadrant.

Dans un exemple de réalisation, le dispositif de verrouillage/déverrouillage est un dispositif électromagnétique.

Dans un autre exemple de réalisation, le dispositif de verrouillage/déverrouillage est un dispositif hybride composé d'éléments mécanique et électromagnétique.

Les moyens d'actionnement sont avantageusement configurés pour commander le au moins un dispositif de verrouillage/déverrouillage.

Dans un mode de réalisation (non représenté sur les figures), le système robotisé 100 comporte, au niveau d'au moins un quadrant Q, un connecteur relié à un des membres dudit au moins un quadrant. Le connecteur est configuré pour recevoir au moins un outil, tel que par exemple un dispositif de préhension d'un objet, de type pince, ventouse, membrane flexible, outil agricole (tel qu'un outil de récolte, de désherbage, de semis...), outil de fabrication (tel qu'un outil de soudure, de perçage, de vissage, d'assemblage...), outil type entretien ménager (tel qu'un aspirateur, un outil de lavage...) ou encore un dispositif de mesure (tel qu'un capteur de température, d'humidité, d'onde électromagnétique (ondes radio ou radiations), mécanique (son, tremblement de terre), sans que cette liste soit exhaustive.

Le connecteur est relié, de manière réversible ou non, audit membre dudit au moins un quadrant.

De préférence, le connecteur est disposé sur un membre d'un quadrant qui peut être désolidarisé du quadrant suivant.

De préférence, le système robotisé comporte un connecteur par quadrant.

Dans un mode de réalisation (non représenté sur les figures), le système robotisé 100 comporte un système de perception au niveau d'au moins un quadrant. De préférence, le système robotisé comporte un système de perception au niveau de chaque quadrant.

Dans un exemple de réalisation, ledit système de perception peut comporter au moins une caméra, stéréo ou mono, ou tout autre capteur perceptif tel qu'un lidar, un capteur TOF (Time of Flight), un capteur ultrason, un capteur infrarouge, un capteur tactile ou encore une centrale inertielle, sans que cette liste soit exhaustive. Lorsque plusieurs capteurs composent le système de perception, ceux-ci peuvent être regroupé au niveau d'un seul membre du quadrant ou répartis dans plusieurs membres du quadrant.

Cinq configurations de quadrant vont à présent être décrites. Pour chaque configuration, le nombre de membres par quadrant diffère.

Dans les cinq configurations décrites, le système robotisé comporte des quadrants présentant tous le même nombre de membres. Cependant, il est également possible de réaliser un système robotisé comprend des quadrants ne présentant pas tous le même nombre de membres.

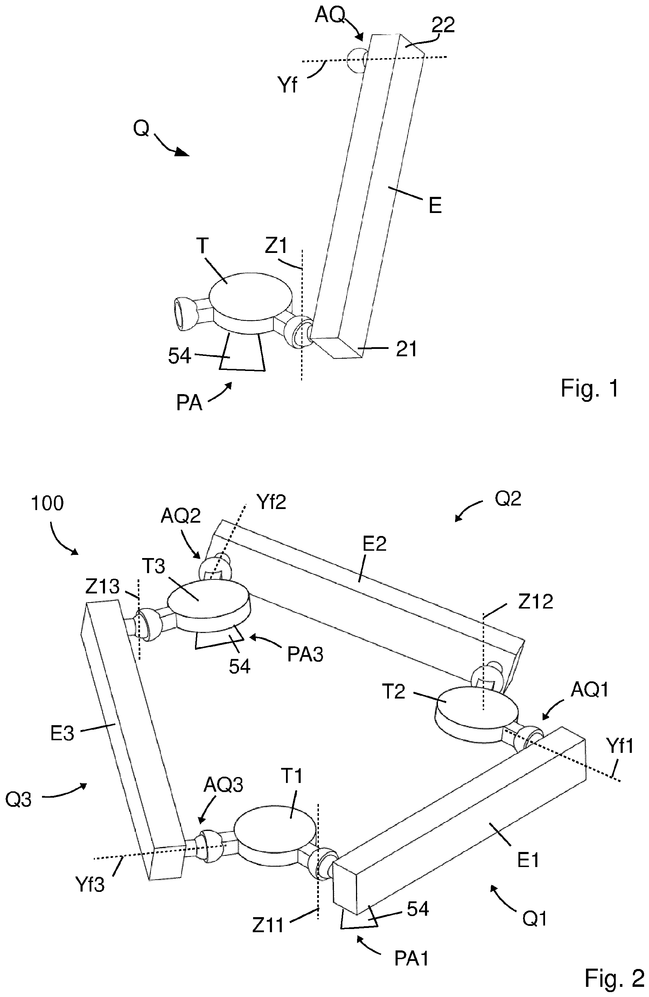

### A - Système robotisé comportant au moins un quadrant à deux membres (figures 1 et 2)

Dans une première configuration, comme illustré sur la figure 1, un quadrant Q du système robotisé 100 comporte deux membres successifs.

Dans l'exemple non limitatif de la figure 2, et ne relevant pas de l'invention, le système robotisé 100 comporte trois quadrants Q1, Q2, Q3 comportant chacun deux membres. Bien que les quadrants soient illustrés sur la figure 1 et décrits au nombre de trois, le nombre de ces quadrants n'est pas limité à celui décrit et illustré. Ainsi, il est possible de réaliser un système robotisé avec quatre quadrants ou plus, sans se départir du cadre de l'invention.

De manière générale, et comme illustré de manière schématique sur la figure 1, un quadrant Q selon la première configuration comporte successivement :
- un premier membre, dénommé torse T,
- un deuxième membre, dénommé épaule E.

Dans cette première configuration, l'épaule E forme ainsi le dernier membre du quadrant.

L'épaule E est liée au torse T par une articulation dite première articulation. Ladite première articulation autorise au moins une rotation d'un axe dit premier axe Z1, comme illustré figure 1.

De préférence, la première articulation autorise au moins trois degrés de liberté. De manière encore plus préférentielle, la première articulation autorise au moins trois rotations, autour de trois axes orthogonaux, dont le premier axe Z1.

Dans l'exemple de la figure 1, la première articulation autorise trois rotations, autour de trois axes orthogonaux, dont le premier axe Z1. Dans cet exemple, la première articulation est une liaison rotule.

Le torse T et l'épaule E d'un quadrant peuvent prendre diverses formes, dès lors que ces formes ne limitent pas le mouvement de l'épaule E par rapport au torse T, obtenu via la première articulation.

Dans un exemple non restrictif de réalisation, illustré sur la figure 1, le torse T du quadrant Q se présente sous la forme d'un corps globalement cylindrique. L'épaule E du quadrant Q se présente sous la forme d'un corps allongé. L'épaule E du quadrant Q présente deux extrémités longitudinales, dites première 21 et deuxième 22 extrémités longitudinales. L'épaule E est, au niveau de sa première extrémité longitudinale 21, articulée en rotation avec le torse T, via la première articulation.

L'articulation fin de quadrant AQ du quadrant Q lie l'épaule E dudit quadrant au torse du quadrant suivant, comme illustré figure 2. Plus précisément, l'articulation fin de quadrant lie l'épaule E dudit quadrant, au niveau de la deuxième extrémité longitudinale 22, au torse du quadrant suivant.

De préférence, l'articulation fin de quadrant AQ autorise au moins trois degrés de liberté. De manière encore plus préférentielle, l'articulation fin de quadrant AQ autorise au moins trois rotations, autour de trois axes orthogonaux, dont un axe dit axe de rotation Yf.

Dans l'exemple des figures 1 et 2, l'articulation fin de quadrant du quadrant autorise trois rotations, autour de trois axes orthogonaux. Dans cet exemple, l'articulation fin de quadrant est une liaison rotule.

Dans un mode de réalisation, lorsqu'un quadrant Q comporte une pièce d'appui PA, ladite pièce d'appui est préférentiellement liée soit au torse T, soit à l'épaule E dudit au moins un quadrant.

Dans l'exemple de la figure 1, la pièce d'appui PA est un pied 54.

En revenant à présent à l'exemple non limitatif de la figure 2, où le système robotisé 100 comporte trois quadrants comprenant chacun deux membres, chaque quadrant se présente sous la forme décrite ci-dessus.

Ainsi, par analogie, un premier quadrant Q1 comporte :
- un torse T1,
- une épaule E1, liée au torse T1 par une première articulation autorisant une rotation autour d'un premier axe Z11,

Un deuxième quadrant Q2 comporte :
- un torse T2,
- une épaule E2, liée au torse T2 par une première articulation autorisant au moins une rotation autour d'un premier axe Z12.

Un troisième quadrant Q3 comporte :
- un torse T3,
- une épaule E3, liée au torse T3 par une première articulation autorisant au moins une rotation autour d'un premier axe Z13.

Le premier quadrant Q1 comporte une articulation fin de quadrant AQ1 le liant au deuxième quadrant Q2. Ladite articulation fin de quadrant AQ1 du premier quadrant Q1 autorise au moins une rotation autour d'un axe de rotation Yf1.

Le deuxième quadrant Q2 comporte une articulation fin de quadrant AQ2 le liant au troisième quadrant Q3. Ladite articulation fin de quadrant AQ2 du deuxième quadrant autorise au moins une rotation autour d'un axe de rotation Yf2.

Le troisième quadrant Q3 comporte une articulation fin de quadrant AQ3 le liant au quatrième quadrant Q4. Ladite articulation fin de quadrant AQ3 du troisième quadrant Q3 autorise au moins une rotation autour d'un axe de rotation Yf3.

De préférence, les moyens d'actionnement sont configurés pour mettre en mouvement tout ou partie des articulations des quadrants du système robotisé 100 et assurer le déplacement dudit système robotisé sur tout type de terrain.

Dans un mode de réalisation (non représenté), lorsque le système robotisé 100 comporte, au niveau d'au moins au quadrant, un connecteur configuré pour recevoir un outil, ledit connecteur est préférentiellement disposé sur l'épaule dudit au moins un quadrant, par exemple au niveau de sa deuxième extrémité 22.

Dans un mode de réalisation, lorsque le système robotisé 100 comporte, au niveau d'au moins un quadrant, une pièce d'appui, ladite pièce d'appui peut être liée soit au torse, soit à l'épaule.

Dans l'exemple non limitatif de la figure 2, le premier quadrant Q1 comporte une pièce d'appui PA1, sous la forme d'un pied 54, liée à l'épaule E1, préférentiellement au niveau de la première extrémité de ladite épaule. Le troisième quadrant Q3 comporte une pièce d'appui PA3, sous la forme d'un pied 54, liée au torse T3.

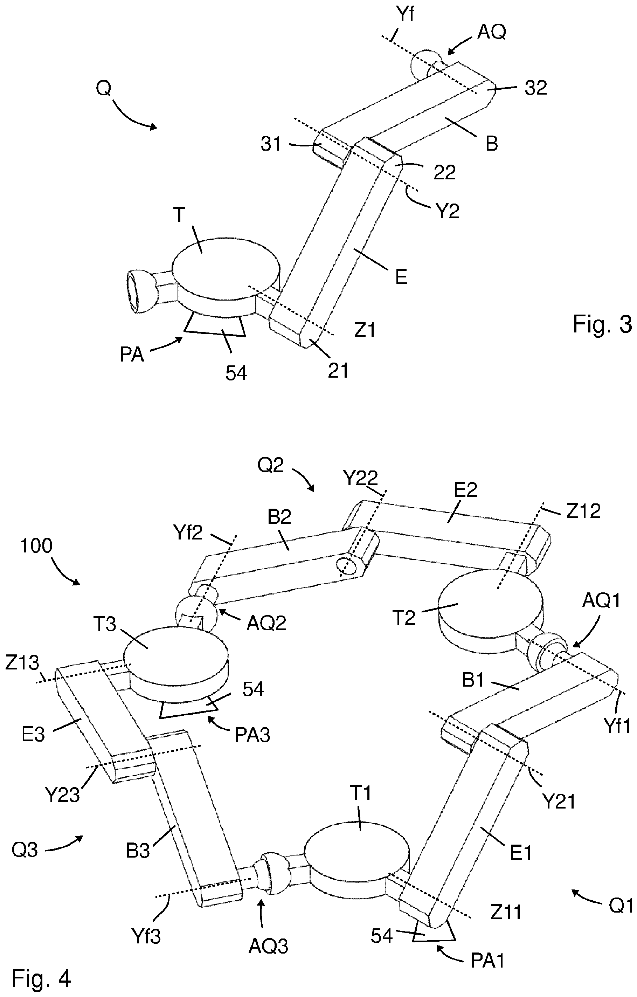

### B - Système robotisé comportant au moins un quadrant à trois membres (figures 3 et 4)

Dans une deuxième configuration, comme illustré sur la figure 3, un quadrant Q du système robotisé 100 comporte trois membres successifs.

Dans l'exemple non limitatif de la figure 4, et ne relevant pas de l'invention, le système robotisé 100 comporte trois quadrants Q1, Q2, Q3 comportant chacun trois membres. Bien que les quadrants soient illustrés sur la figure 4 et décrits au nombre de trois, le nombre de ces quadrants n'est pas limité à celui décrit et illustré. Ainsi, il est possible de réaliser un système robotisé avec quatre quadrants ou plus, sans se départir du cadre de l'invention.

Cette deuxième configuration reprend tous les éléments (membres, articulations) décrits dans la première configuration.

Ainsi, de manière générale, et comme illustré de manière schématique sur la figure 3, un quadrant Q selon la deuxième configuration comporte successivement, en plus du torse T et de l'épaule E, un troisième membre, dénommé bras B.

Dans cette deuxième configuration, le bras B forme ainsi le dernier membre du quadrant Q.

Comme pour la première configuration, l'épaule E est liée au torse T par la première articulation. Ladite première articulation autorise au moins une rotation d'un premier axe Z1.

De préférence, et comme illustré sur la figure 3, la première articulation autorise uniquement une rotation autour du premier axe Z1.

Le bras B est lié à l'épaule E par une articulation, dite deuxième articulation. Ladite deuxième articulation autorise au moins une rotation autour d'un axe dit deuxième axe Y2.

Le deuxième axe Y2 est préférentiellement parallèle au premier axe Z1.

De préférence, et comme illustré sur la figure 3, la deuxième articulation autorise uniquement une rotation autour du deuxième axe Y2.

Le torse T, l'épaule E et le bras B d'un quadrant Q peuvent prendre diverses formes, dès lors que ces formes ne limitent pas le mouvement de l'épaule E par rapport au torse T, obtenu via la première articulation, ni le mouvement du bras B par rapport à l'épaule E, obtenu via la deuxième articulation.

Dans un exemple non restrictif de réalisation, illustré sur la figure 3, le torse T du quadrant Q se présente sous la forme d'un corps globalement cylindrique.

De préférence, l'épaule E et le bras B du quadrant Q se présentent chacun sous la forme d'un corps allongé. L'épaule E et le bras B sont préférentiellement sensiblement de forme identique. L'épaule E et e bras B sont préférentiellement sensiblement de même longueur.

L'épaule E et le bras B du quadrant Q présentent chacun deux extrémités longitudinales, dites première et deuxième extrémités longitudinales 21, 22.

L'épaule E est, au niveau de sa première extrémité longitudinale 21, articulée en rotation avec le torse T, via la première articulation, au moins autour du premier axe Z1.

Le premier axe Z1 s'étend préférentiellement orthogonalement au corps allongé de l'épaule E, dans le sens d'une épaisseur dudit corps allongé.

L'épaule E est, au niveau de sa deuxième extrémité longitudinale 22, articulé en rotation avec le bras B, au niveau de la première extrémité longitudinale 31 dudit bras B, via la deuxième articulation, autour du deuxième axe Y2.

Le deuxième axe Y2 s'étend préférentiellement orthogonalement au corps allongé de l'épaule E, et au corps allongé du bras B, dans le sens d'une épaisseur de l'épaule et du bras.

De préférence, lorsque les première et deuxième articulations du quadrant Q autorise uniquement une rotation autour d'un axe, les première et deuxième articulations sont chacune réalisées par une liaison pivot, par exemple au moyen d'un palier lisse ou encore de roulements à billes. Il est également possible de réaliser la deuxième articulation du quadrant à partir d'une combinaison de deux liaisons pivot de même axe.

De telles réalisations de liaison pivot sont classiques et connues de l'homme du métier et ne seront pas décrites plus en détail.

L'articulation fin de quadrant AQ du quadrant Q lie le bras B dudit quadrant au torse du quadrant suivant, comme illustré figure 4. Plus précisément, l'articulation fin de quadrant du quadrant Q lie le bras dudit quadrant, au niveau de sa deuxième extrémité longitudinale 32, au torse du quadrant suivant.

De préférence, l'articulation fin de quadrant AQ du quadrant Q autorise au moins trois degrés de liberté. De manière encore plus préférentielle, l'articulation fin de quadrant AQ du quadrant Q autorise au moins trois rotations, autour de trois axes orthogonaux, dont un axe de rotation Yf. Ledit axe de rotation Yf est parallèle au deuxième axe.

Dans l'exemple des figures 3 et 4, l'articulation fin de quadrant du quadrant autorise trois rotations, autour de trois axes orthogonaux. De préférence, l'articulation fin de quadrant du quadrant est réalisée par une liaison rotule.

Dans un mode de réalisation, lorsqu'un quadrant Q comporte une pièce d'appui PA, ladite pièce d'appui est préférentiellement liée soit au torse T, soit à l'épaule E dudit au moins un quadrant.

Dans l'exemple de la figure 3, la pièce d'appui PA est un pied 54.

En revenant à présent à l'exemple non limitatif de la figure 4, où le système robotisé 100 comporte trois quadrants comprenant chacun trois membres, chaque quadrant se présente sous la forme décrite ci-dessus.

Ainsi, par analogie, un premier quadrant Q1 comporte :
- un torse T1,
- une épaule E1, liée au torse T1 par une première articulation autorisant une rotation autour d'un premier axe Z11,
- un bras B1, lié à l'épaule E1 par une deuxième articulation autorisant une rotation autour d'un deuxième axe Y21.

Les axes Z11 et Y21 sont parallèles.

Un deuxième quadrant Q2 comporte :
- un torse T2,
- une épaule E2, liée au torse T2 par une première articulation autorisant une rotation autour d'un premier axe Z12,
- un bras B2, lié à l'épaule E2 par une deuxième articulation autorisant une rotation autour d'un deuxième axe Y22.

Les axes Z12 et Y22 sont parallèles.

Un troisième quadrant Q3 comporte :
- un torse T3,
- une épaule E3, liée au torse T3 par une première articulation autorisant une rotation autour d'un premier axe Z13,
- un bras B3, lié à l'épaule E3 par une deuxième articulation autorisant une rotation autour d'un deuxième axe Y23.

Les axes Z13 et Y23 sont parallèles.

Le premier quadrant Q1 comporte une articulation fin de quadrant AQ1 le liant au deuxième quadrant Q2. Ladite articulation AQ1 du premier quadrant Q1 autorise au moins une rotation autour d'un axe de rotation Yf1. L'axe de rotation Yf1 est parallèle au deuxième axe Y21.

Le deuxième quadrant Q2 comporte une articulation fin de quadrant AQ2 le liant au troisième quadrant Q3. Ladite articulation fin de quadrant du deuxième quadrant Q2 autorise au moins une rotation autour d'un axe de rotation Yf2. L'axe de rotation Yf2 est parallèle au deuxième axe Y22.

Le troisième quadrant Q3 comporte une articulation fin de quadrant AQ3 le liant au quatrième quadrant Q4. Ladite articulation fin de quadrant AQ3 du troisième quadrant Q3 autorise au moins une rotation autour d'un axe de rotation Yf3. L'axe de rotation Yf3 est parallèle au deuxième axe Y23.

Dans l'exemple de la figure 4, Yf1 et Z11 sont parallèles, Yf2 et Z12 sont parallèles, Yf3 et Z23 sont parallèles.

De préférence, l'articulation fin de quadrant AQ1 du premier quadrant Q1, l'articulation fin de quadrant AQ2 du deuxième quadrant Q2, et l'articulation fin de quadrant AQ3 du troisième quadrant Q3 sont réalisées par une liaison rotule.

De préférence, les moyens d'actionnement sont configurés pour mettre en mouvement tout ou partie des articulations des quadrants du système robotisé 100 et assurer le déplacement dudit système robotisé sur tout type de terrain.

Dans un mode de réalisation (non représenté), lorsque le système robotisé 100 comporte, au niveau d'au moins au quadrant, un connecteur configuré pour recevoir un outil, ledit connecteur est préférentiellement disposé sur le bras dudit au moins un quadrant, par exemple au niveau de sa deuxième extrémité 22.

Dans un mode de réalisation, lorsque le système robotisé 100 comporte, au niveau d'au moins un quadrant, une pièce d'appui, ladite pièce d'appui peut être liée soit au torse, soit à l'épaule.

Dans l'exemple non limitatif de la figure 4, le premier quadrant Q1 comporte une pièce d'appui PA1, sous la forme d'un pied 54, liée à l'épaule E1, préférentiellement au niveau de la première extrémité de ladite épaule. Le troisième quadrant Q3 comporte une pièce d'appui PA3, sous la forme d'un pied 54, liée au torse T3.

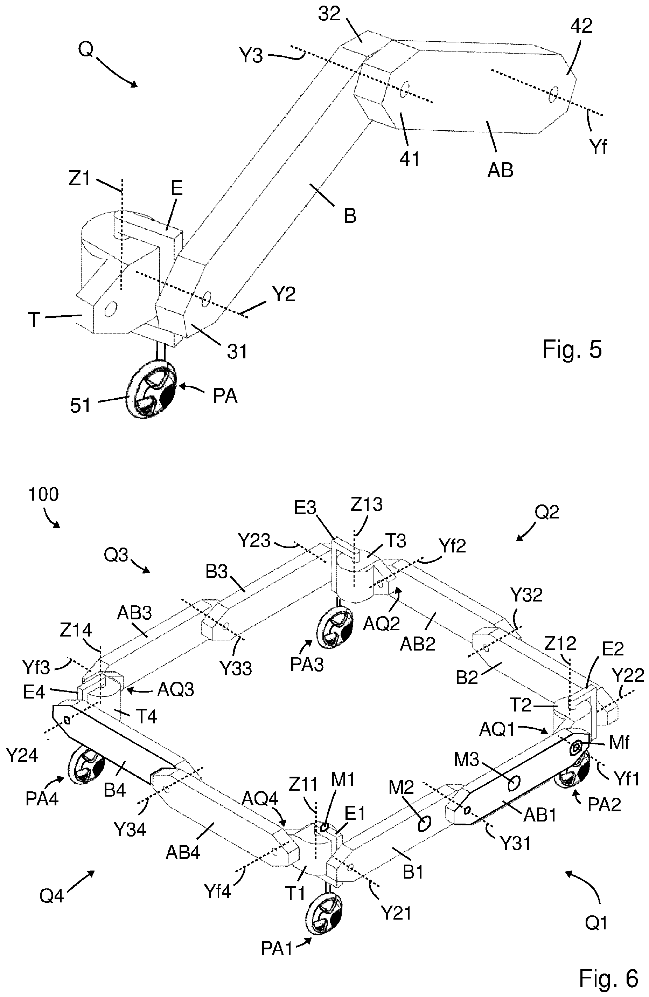

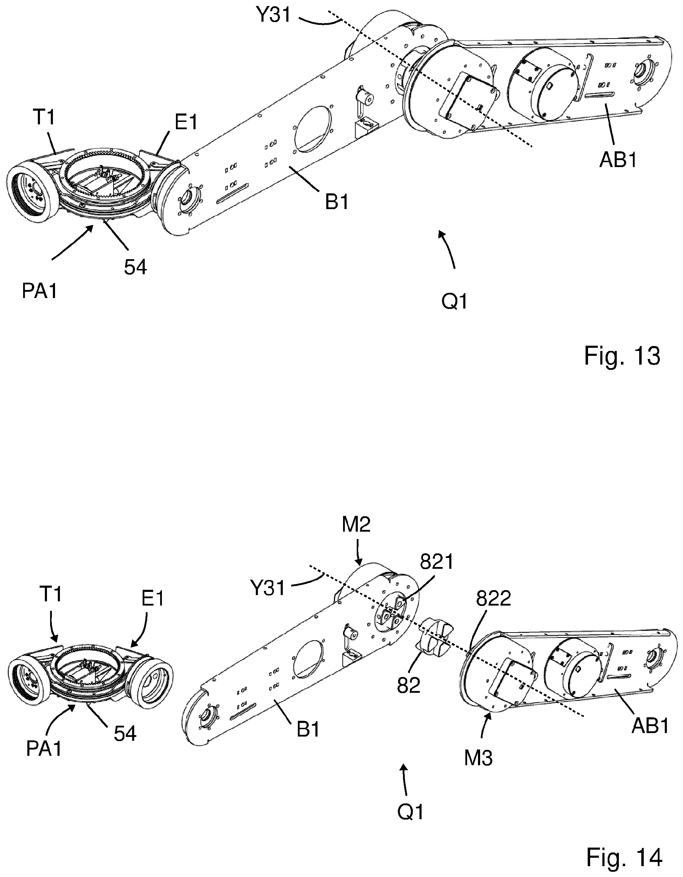

### C - Système robotisé comportant au moins un quadrant à quatre membres (figures 5 et 13

Dans une troisième configuration, comme illustré sur la figure 5, un quadrant Q du système robotisé 100 comporte quatre membres successifs.

Dans l'exemple non limitatif de la figure 6, le système robotisé 100 comporte quatre quadrants Q1, Q2, Q3, Q4, comportant chacun quatre membres. Bien que les quadrants soient illustrés sur la figure 6 et décrits au nombre de quatre, le nombre de ces quadrants n'est pas limité à celui décrit et illustré. Ainsi, il est possible de réaliser un système robotisé avec trois quadrants, cinq quadrants ou plus, sans se départir du cadre de l'invention.

Cette troisième configuration reprend tous les éléments (membres, articulations) décrits dans la deuxième configuration.

Ainsi, de manière générale, et comme illustré de manière schématique sur la figure 5, un quadrant Q selon la troisième configuration comporte successivement, outre le torse T, l'épaule E et le bras B, un quatrième membre, dénommé avant-bras AB.

Dans cette troisième configuration, l'avant-bras AB forme ainsi le dernier membre du quadrant Q.

Comme pour la première et la deuxième configuration, l'épaule E est liée au torse T par la première articulation. Ladite première articulation autorise au moins une rotation d'un premier axe Z1.

De préférence, et comme illustré sur la figure 5, la première articulation autorise uniquement une rotation autour du premier axe Z1.

Le bras B est lié à l'épaule E par la deuxième articulation. Ladite deuxième articulation autorise au moins une rotation autour d'un deuxième axe Y2. Le deuxième axe Y2 est préférentiellement orthogonal au premier axe Z1.

De préférence, et comme illustré sur la figure 5, la deuxième articulation autorise uniquement une rotation autour du deuxième axe Y2.

L'avant-bras AB est lié au bras B par une articulation, dite troisième articulation.

Ladite troisième articulation autorise au moins une rotation autour d'un axe dit troisième axe Y3. Le troisième axe Y3 est préférentiellement parallèle au deuxième axe Y2.

De préférence, et comme illustré sur la figure 5, la troisième articulation autorise uniquement une rotation autour du troisième axe Y3.

Le torse T, l'épaule E, le bras B et l'avant-bras AB d'un quadrant Q peuvent prendre diverses formes, dès lors que ces formes ne limitent pas le mouvement de l'épaule E par rapport au torse T, obtenu via la première articulation, ni le mouvement du bras par rapport à l'épaule E, obtenu via la deuxième articulation, ni le mouvement de l'avant-bras AB par rapport au bras B, obtenu via la troisième articulation.

Dans un exemple préféré de réalisation, illustré sur la figure 5, le bras B et l'avant-bras AB du quadrant Q se présentent chacun sous la forme d'un corps allongé. Le bras B et l'avant-bras AB sont préférentiellement sensiblement de forme identique. Le bras B et l'avant-bras AB sont préférentiellement sensiblement de même longueur.

Le bras B et l'avant-bras AB du quadrant Q présentent chacun deux extrémités longitudinales, dites première et deuxième extrémités longitudinales.

Le bras B est, au niveau de sa première extrémité longitudinale 31, articulé en rotation avec l'épaule E autour du deuxième axe Y2, via la deuxième articulation.

Le deuxième axe Y2 s'étend préférentiellement orthogonalement au corps allongé du bras, dans le sens d'une épaisseur dudit corps allongé.

Le bras B est, au niveau de sa deuxième extrémité longitudinale 32, articulé en rotation avec l'avant-bras AB, au niveau de la première extrémité longitudinale 41 dudit avant-bras AB, autour du troisième axe Y3, via la troisième articulation.

Le troisième axe Y3 s'étend préférentiellement orthogonalement au corps allongé du bras B, et au corps allongé de l'avant-bras AB, dans le sens d'une épaisseur de l'avant-bras et du bras.

Des exemples de variantes de réalisation d'un torse T et d'une épaule E seront décrits ultérieurement.

De préférence, les première, deuxième et troisième articulations du quadrant Q sont chacune réalisées par une liaison pivot, par exemple au moyen d'un palier lisse ou encore de roulements à billes. Il est également possible de réaliser la troisième articulation du quadrant à partir d'une combinaison de deux liaisons pivot de même axe.

L'articulation fin de quadrant AQ du quadrant Q lie l'avant-bras dudit quadrant au torse du quadrant suivant. Plus précisément, ladite articulation fin de quadrant AQ lie l'avant-bras AB du quadrant, au niveau de sa deuxième extrémité 42, au torse du quadrant suivant.

Ladite articulation fin de quadrant AQ autorise au moins une rotation autour d'un axe de rotation Yf. Ledit axe de rotation est parallèle au deuxième axe de la deuxième articulation du quadrant et au troisième axe de la troisième articulation du quadrant. En d'autres termes, le deuxième axe, le troisième axe et l'axe de rotation Yf d'un quadrant Q sont parallèles entre eux.

De préférence, comme illustré sur la figure 6, l'articulation fin de quadrant AQ du quadrant Q selon la troisième configuration autorise uniquement une rotation autour de l'axe de rotation Yf.

La forme du torse T du quadrant Q selon la troisième configuration, outre le fait qu'elle ne doit pas limiter la rotation autour du premier axe Z1 du torse T par rapport à l'épaule E, par la première articulation, ne doit pas également limiter la rotation autour de l'axe de rotation Yf de l'avant-bras du quadrant précédent par rapport audit torse du quadrant, par l'articulation fin de quadrant du quadrant.

Dans une forme de réalisation d'une articulation fin de quadrant AQ, ladite articulation fin de quadrant AQ est réalisée par une liaison pivot entre l'avant-bras du quadrant et le torse du quadrant suivant, par exemple au moyen d'un palier lisse ou encore de roulements à billes.

Dans une autre forme de réalisation d'une articulation fin de quadrant AQ, ladite articulation fin de quadrant AQ est réalisée à partir d'une combinaison d'une liaison pivot et d'une liaison fixe, sans degré de liberté.

Dans un exemple préféré de cette forme de réalisation, non représenté, l'articulation fin de quadrant d'un quadrant comporte une pièce auxiliaire, nommée pré-torse, située entre la liaison pivot et la liaison fixe. Ainsi le pré-torse est lié d'une part à l'avant-bras du quadrant par la liaison pivot autorisant une rotation autour de l'axe de rotation Yf et d'autre part au torse du quadrant suivant par une liaison sans degré de liberté.

Dans un mode de réalisation, lorsqu'un quadrant Q comporte une pièce d'appui PA, ladite pièce d'appui PA est préférentiellement liée soit au torse T soit à l'épaule E du quadrant.

Dans l'exemple non limitatif de la figure 5, la pièce d'appui PA est liée à l'épaule E.

Dans un exemple de réalisation (non représenté) de la pièce d'appui, la pièce d'appui PA comporte un pied, lié fixement au torse ou à l'épaule. En d'autres termes, il n'existe aucun degré de liberté entre le pied et le torse ou l'épaule.

Dans un autre exemple de réalisation de la pièce d'appui, tel qu'illustré sur la figure 5, la pièce d'appui PA comporte une roue 51. La roue 51 est reliée au torse T ou à l'épaule E, par une articulation autorisant un ou deux degrés de liberté. Dans le cas où la roue 51 est reliée au torse T ou à l'épaule E par une articulation à un degré de liberté, le degré de liberté est selon l'axe de la roue afin que celle-ci puisse tourner autour de son axe. Dans le cas où la roue est reliée au torse ou à l'épaule par une articulation à deux degrés de liberté, un premier degré de liberté est selon l'axe de la roue afin que celle-ci puisse tourner autour de son axe et un deuxième degré de liberté selon le premier axe Z1 afin de pouvoir orienter la roue.

D'autres exemples de réalisation d'une pièce d'appui seront décrits ultérieurement. En revenant à présent à l'exemple de la figure 6, où le système robotisé 100 comporte quatre quadrants comprenant chacun quatre membres, chaque quadrant se présente sous la forme décrite ci-dessus.

Ainsi, par analogie, un premier quadrant Q1 comporte :
- un torse T1,
- une épaule E1, liée au torse T1 par une première articulation autorisant une rotation autour d'un premier axe Z11,
- un bras B1, lié à l'épaule E1 par une deuxième articulation autorisant une rotation autour d'un deuxième axe Y21,
- un avant-bras AB1, lié au bras B1 par une troisième articulation autorisant une rotation autour d'un troisième axe Y31.

Les axes Z11 et Y21 sont orthogonaux. Les axes Y21 et Y31 sont parallèles.

Un deuxième quadrant Q2 comporte :
- un torse T2,
- une épaule E2, liée au torse T2 par une première articulation autorisant une rotation autour d'un premier axe Z12,
- le bras B2, lié à l'épaule E2 par une deuxième articulation autorisant une rotation autour d'un deuxième axe Y22,
- un avant-bras AB2, lié au bras B2 par une troisième articulation autorisant une rotation autour d'un troisième axe Y32.

Les axes Z12 et Y22 sont orthogonaux. Les axes Y22 et Y32 sont parallèles.

Un troisième quadrant Q3 comporte :
- un torse T3,
- une épaule E3, liée au torse T3 par une première articulation autorisant une rotation autour d'un premier axe Z13,
- le bras B3, lié à l'épaule E3 par une deuxième articulation autorisant une rotation autour d'un deuxième axe Y23,
- un avant-bras AB3, lié au bras B3 par une troisième articulation autorisant une rotation autour d'un troisième axe Y33.

Les axes Z13 et Y23 sont orthogonaux. Les axes Y23 et Y33 sont parallèles.

Un quatrième quadrant Q4 comporte :
- un torse T4,
- une épaule E4, liée au torse T4 par une première articulation autorisant une rotation autour d'un premier axe Z14,
- le bras B4, lié à l'épaule E4 par une deuxième articulation autorisant une rotation autour d'un deuxième axe Y24,
- un avant-bras AB4, lié au bras B4 par une troisième articulation autorisant une rotation autour d'un troisième axe Y34.

Les axes Z14 et Y24 sont orthogonaux. Les axes Y24 et Y34 sont parallèles.

Le premier quadrant Q1 comporte une articulation fin de quadrant AQ1 le liant au deuxième quadrant Q2. Ladite articulation fin de quadrant AQ1 dudit premier quadrant autorise au moins une rotation autour d'un axe de rotation Yf1, ledit axe de rotation Yf1 étant parallèle au deuxième axe Y21 et au troisième axe Y31 du premier quadrant Q1.

Le deuxième quadrant Q2 comporte une articulation fin de quadrant AQ2 le liant au troisième quadrant Q3. Ladite articulation fin de quadrant AQ2 dudit deuxième quadrant autorise au moins une rotation autour d'un axe de rotation Yf2, l'axe de rotation Yf2 étant parallèle au deuxième axe Y22 et au troisième axe Y32 du deuxième quadrant Q2.

Le troisième quadrant Q3 comporte une tarticulation fin de quadrant AQ3 le liant au quatrième quadrant Q4. Ladite articulation fin de quadrant AQ3 dudit troisième quadrant autorise au moins une rotation autour d'un axe de rotation Yf3, l'axe de rotation Yf3 étant parallèle au deuxième axe Y23 et au troisième axe Y33 du troisième quadrant Q3.

Enfin, le quatrième quadrant Q4 comporte une articulation fin de quadrant AQ4 le liant au premier quadrant Q1. Ladite articulation fin de quadrant AQ4 du quatrième quadrant Q4 autorise uniquement une rotation autour d'un axe de rotation Yf4, l'axe de rotation Yf4 étant parallèle au deuxième axe Y24 et au troisième axe Y34 du quatrième quadrant Q4.

De préférence, les moyens d'actionnement sont configurés pour mettre en mouvement l'ensemble des articulations du système robotisé et assurer le déplacement dudit système robotisé sur tout type de terrain.

Dans un premier mode de réalisation des moyens d'actionnement, lesdits moyens d'actionnement comportent, pour chacune des articulations des quadrants du système robotisé, un moteur associé. Chaque moteur est apte à appliquer un mouvement de rotation entre les deux membres liés par l'articulation associée.

Dans un exemple de réalisation de ce premier mode de réalisation, pour le premier quadrant, comme illustré sur la figure 6 :
- un premier moteur M1 est destiné à piloter et déplacer l'épaule E1 par rapport au torse T1 autour du premier axe Z11,
- un deuxième moteur M2 est destiné à piloter et déplacer le bras B1 par rapport à l'épaule E1 autour du deuxième axe Y21,
- un troisième moteur M3 est destiné à piloter et déplacer l'avant-bras AB1 par rapport au bras B1 autour du troisième axe Y31,
- un quatrième moteur Mf est destiné à piloter et déplacer le torse T2 du deuxième quadrant Q2 par rapport à l'avant-bras AB1 du premier quadrant Q1 autour de l'axe de rotation Yf1.

Dans un tel premier mode de réalisation, chaque articulation est ainsi contrôlée indépendamment les unes des autres.

Dans l'exemple de la figure 6, où le système robotisé comporte quatre quadrants, et quatre membres par quadrant, le système robotisé comporte seize articulations et donc seize moteurs.

Il est clair que l'actionnement des articulations peut être obtenu par tout type de moteur adapté, comme par exemple des moteurs électriques à courant alternatif, des moteurs à courant continu, un système pneumatique, des moteurs à explosion à courant continu.

De préférence, le moteur est soit disposé au niveau de l'articulation associée soit en est déporté.

Dans un exemple de réalisation, illustré sur la figure 6, le deuxième moteur M2 associé à la deuxième articulation du premier quadrant Q1 peut être déporté dans le bras B, par exemple à mi-longueur.

Par ailleurs, chaque moteur est préférentiellement pourvu d'un dispositif de mesure (non représenté), ou capteur, destiné à mesurer l'évolution de l'état dudit moteur et donc de l'articulation associée. Pour les moteurs dits rotatifs, le capteur donne préférentiellement accès l'angle et la vitesse de rotation entre les deux membres associés, donc les mouvements desdits deux membres qu'il entraîne, de manière à apporter une réponse de commande adaptée.

Les dispositifs de mesure peuvent être de tout type adapté, tel par exemples des codeurs optiques, des potentiomètres, des capteurs à effet Hall.

Dans un deuxième mode de réalisation, ne relevant pas de l'invention, lesdits moyens d'actionnement comportent, pour une partie des articulations des quadrants du système robotisé, un moteur associé. Un tel mode de réalisation permet avantageusement, en réduisant le nombre de moteurs pour contrôler l'ensemble des articulations des quadrants du système robotisé, d'alléger autant en poids qu'en coût le système robotisé.

Dans un premier exemple de réalisation de ce deuxième mode de réalisation, les articulations non motorisées sont libres et se meuvent sous l'effet des mouvements des autres membres et de l'environnement extérieur.

Dans un deuxième exemple de réalisation de ce deuxième mode de réalisation, les articulations non motorisées sont reliées à des articulations motorisées via un système de contrainte.

Les moyens d'actionnement comportent, par exemple pour le premier quadrant Q1 :
- un premier moteur M1 configuré pour piloter la première articulation du premier quadrant Q1, en déplaçant l'épaule E1 par rapport au torse T1 en rotation autour du premier axe Z11,
- deux moteurs M2, M3, configurés pour piloter deux articulations choisies parmi la deuxième articulation du premier quadrant Q1, la troisième articulation du premier quadrant Q1 et la articulation fin de quadrant AQ1 du premier quadrant, et un système 80 de poulies et courroies ou câbles reliant la deuxième articulation dudit premier quadrant Q1, la troisième articulation dudit premier quadrant et la articulation fin de quadrant AQ1 du premier quadrant.

Ainsi, dans ce deuxième exemple de réalisation, un moteur est supprimé au niveau d'une des trois articulations, celle-ci est alors contrainte par rapport aux deux autres articulations. En d'autres termes, lorsque les deux articulations motorisées font leur déplacement en rotation, l'articulation non motorisée fait le déplacement qui va lui être imposé par la contrainte qui lui a été imposé mécaniquement par les courroies. La contrainte imposée consiste à garder le torse T1 du premier quadrant Q1 et le torse T2 du deuxième quadrant Q2 parallèles entre eux. Par « garder le torse du premier quadrant et le torse du deuxième quadrant parallèles entre eux », on entend conserver le premier axe Z11 du premier quadrant Q1 parallèle au premier axe Z12 du deuxième quadrant.

Un tel agencement peut avantageusement être appliqué pour chaque quadrant. De manière générale, la contrainte imposée consiste à garder le torse T d'un quadrant Q et le torse du quadrant suivant parallèles entre eux.

Ainsi, dans l'exemple de la figure 6, où le système robotisé comporte quatre quadrants, et quatre membres par quadrant, le système robotisé comporte seize articulations et donc douze moteurs.

Comme pour le premier mode de réalisation des moyens d'actionnement, l'actionnement des articulations peut être obtenu par tout type de moteur adapté.

De préférence, le moteur est soit disposé au niveau de l'articulation associée soit en est déporté.

Par ailleurs, comme pour le premier mode de réalisation des moyens d'actionnement chaque moteur est préférentiellement pourvu d'un dispositif de mesure.

Dans une première variante de réalisation de ce deuxième exemple de réalisation, le système 80 de poulies et courroies ou câbles est installé sur un quadrant du système robotisé 100 par un montage dit en parallèle. Un montage en parallèle permet avantageusement d'installer aisément le système 80 de poulies et courroies ou câbles sur le quadrant du système robotisé, ou de le retirer, sans avoir besoin de démonter le quadrant du système robotisé. Le système de poulies et courroies ou câbles est dans une chaine cinématique parallèle à la chaine cinématique du système robotisé.

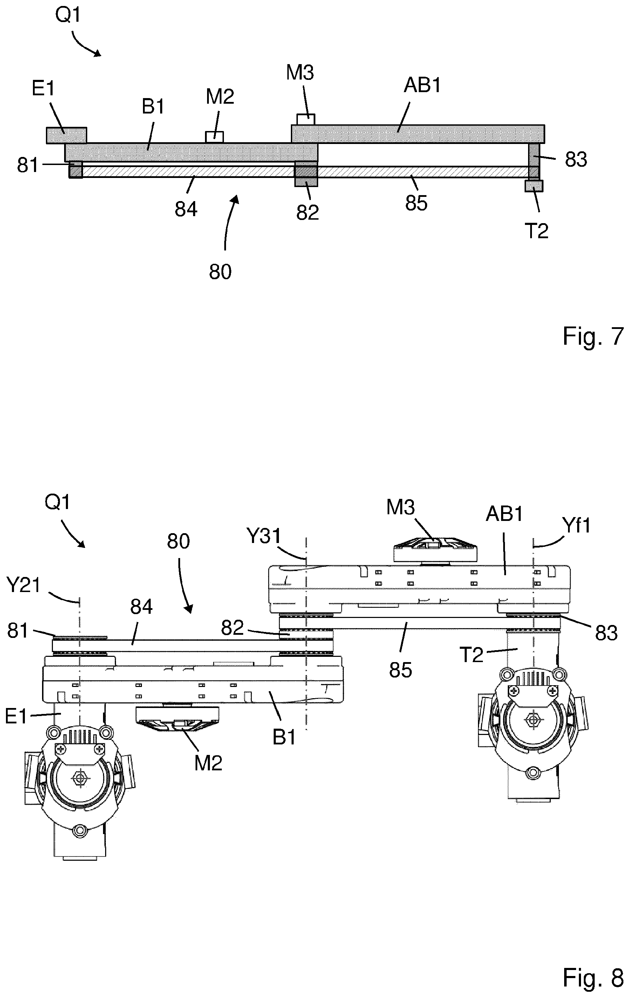

Un exemple de réalisation de cette première variante, ne relevant pas de l 'invention, est à présent décrit pour le premier quadrant, comme illustré sur la figure 7. Dans cet exemple de réalisation, les moteurs liés à la deuxième articulation et la troisième articulation du premier quadrant sont maintenus, et le moteur lié à l'articulation fin de quadrant du premier quadrant est supprimé. L'articulation fin de quadrant AQ1 du premier quadrant Q1 va être contrainte par rapport à la deuxième articulation et la troisième articulation du premier quadrant Q1.

La deuxième articulation du premier quadrant Q1, liant l'épaule E1 et le bras B1, est réalisée par une liaison pivot. Le deuxième moteur M2 vient régler l'angle entre l'épaule E1 et le bras B1 et est préférentiellement disposé au niveau du bras B1, par exemple sensiblement à mi-longueur.

De même, la troisième articulation du premier quadrant Q1, liant le bras B1 et l'avant-bras AB1, est réalisée par une liaison pivot. Le troisième moteur M3 vient régler l'angle entre le bras B1 et l'avant-bras AB1 et est préférentiellement disposé au niveau de la troisième articulation.

Une première poulie 81 est fixée solidaire à l'épaule E1 du premier quadrant Q1, au niveau de la deuxième articulation.

Une poulie centrale 82 est agencée au niveau de la troisième articulation du premier quadrant Q1. La poulie centrale 82 n'est liée fixement ni au bras B1 ni à l'avant-bras AB1 du premier quadrant. La poulie centrale 82 est sur une liaison pivot distincte de la troisième articulation, mais partage le même axe que la troisième articulation du premier quadrant.

Une deuxième poulie 83 est fixée solidaire du torse T2 du deuxième quadrant Q2, au niveau de l'articulation fin de quadrant AQ1 du premier quadrant Q1.

Une première courroie 84, ou câble, relie la première poulie 81 à la poulie centrale 82. Une deuxième courroie 85, ou câble, relie la poulie centrale 82 à la deuxième poulie 83.

Ainsi lorsque le deuxième moteur M2 modifie l'angle entre l'épaule E1 et le bras B1 du premier quadrant Q1, la première courroie 84 va entrainer la poulie centrale 82, et celle-ci va entraîner à son tour la deuxième courroie 85, qui va contraindre l'angle entre l'avant-bras AB1 du premier quadrant Q1 et le torse T2 du second quadrant Q2 de telle sorte que les premiers axes Z11, Z12 des premier et deuxième quadrants restent parallèles entre eux.

Par analogie, il est également possible de maintenir les moteurs liés à la troisième articulation du premier quadrant et l'articulation fin de quadrant du premier quadrant, de supprimer le moteur de la deuxième articulation du premier quadrant et de venir contraindre celle-ci à la troisième articulation du premier quadrant et à l'articulation fin de quadrant du premier quadrant.

Dans une deuxième variante de réalisation du deuxième exemple de réalisation, le système 80 de poulies et courroies ou câbles est imbriqué dans le système robotisé. Le système 80 de poulies et courroies ou câbles est dans la chaine cinématique du système robotisé 100. L'installation du système de poulies et courroies ou câbles sur le système robotisé, ou son retrait, nécessite en conséquence le démontage du système robotisé.

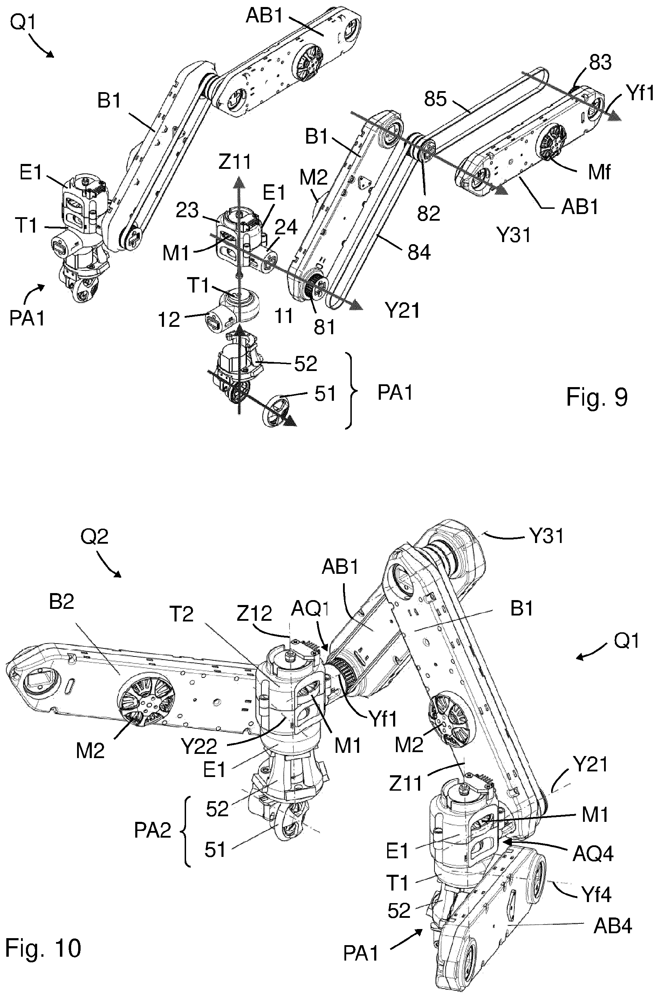

Un exemple de réalisation de cette deuxième variante, ne relevant pas de l'invention, est à présent décrit pour le premier quadrant, comme illustré sur les figures 8 et 9. Dans cet exemple de réalisation, la troisième articulation est composée d'une première liaison pivot reliant le bras B1 à une pièce nommée poulie centrale 82 et d'une deuxième liaison pivot de même axe que la première liaison pivot et liant la poulie centrale 82 à l'avant-bras AB1. En d'autres termes, la troisième articulation, liant le bras B1 et l'avant-bras AB1, est réalisée à partir d'une combinaison de deux liaisons pivot de même axe. Chacune de ces liaisons pivot est motorisé. La troisième articulation comporte donc deux moteurs.

La deuxième articulation du premier quadrant Q1, liant l'épaule E1 et le bras B1, est réalisée par une liaison pivot.

Une première poulie 81 est fixée solidaire à l'épaule E1 du premier quadrant, au niveau de ladite deuxième articulation.

Une deuxième poulie 83 est fixée solidaire du torse T2 du deuxième quadrant Q2, au niveau de l'articulation fin de quadrant AQ1 du premier quadrant Q1.

Une première courroie 84, ou câble, relie la première poulie 81 à la poulie centrale 82. Une deuxième courroie 85, ou câble, relie la poulie centrale 82 à la deuxième poulie 83.

Le deuxième moteur M2 vient régler l'angle entre le bras B1 et la poulie centrale 82 en agissant sur la première liaison pivot de la troisième articulation. Le deuxième moteur M2 est préférentiellement disposé au niveau du bras B1, par exemple sensiblement à mi-longueur. Il peut également être disposé directement dans l'axe de la deuxième liaison pivot de la troisième articulation, en transmission directe. Le troisième moteur M3 vient régler l'angle entre la poulie centrale 82 et le bras B1 en agissant sur la deuxième liaison pivot de la troisième articulation. Le troisième moteur M3 est préférentiellement disposé au niveau de l'avant-bras AB1, par exemple sensiblement à mi-longueur. Il peut également être disposé directement dans l'axe de la deuxième liaison pivot de la troisième articulation, en transmission directe.

Par comparaison avec la première variante, la modification principale réside dans le positionnement de la poulie centrale 82. Plutôt que de positionner un moteur qui règle l'angle entre l'épaule E1 et le bras B1 du premier quadrant Q1 et un moteur qui règle l'angle entre le bras B1 et l'avant-bras B1 du premier quadrant, on vient positionner un moteur qui pilote l'angle entre le bras et la poulie centrale et un moteur qui pilote l'angle entre la poulie centrale et l'avant-bras du premier quadrant. Dans cette deuxième variante, les deuxième et troisième moteurs M2 et M3 peuvent être fixés dans l'axe de la troisième articulation. Un tel agencement permet avantageusement d'alléger la deuxième articulation et l'articulation de fin de quadrant du premier quadrant Q1.

De plus, dans cette deuxième variante, le système de poulies peut être décomposé en deux ensembles : un premier ensemble au niveau du bras et un deuxième ensemble au niveau de l'avant-bras. En séparant la poulie centrale en deux pièces s'emboitant fixement, il est alors possible de désassembler aisément le bras de l'avant-bras.

Dans un mode de réalisation (non représenté), lorsque le système robotisé 100 comporte un dispositif de verrouillage/déverrouillage configuré pour désolidariser deux quadrants successifs, dits quadrant amont et quadrant aval, et lorsqu'une articulation fin de quadrant AQ du quadrant amont comporte un pré-torse, lesdits deux quadrants successifs sont configurés pour pouvoir être désolidarisés de manière réversible, au niveau de la liaison sans degré de liberté reliant le pré-torse du quadrant amont au torse du quadrant aval.

Dans un exemple de réalisation le premier organe de fixation du dispositif de verrouillage/déverrouillage est lié fixement au pré-torse du quadrant amont et le deuxième organe de fixation du dispositif de verrouillage/déverrouillage est lié fixement au torse du quadrant aval.

Dans un mode de réalisation (non représenté), lorsque le système robotisé 100 comporte, au niveau d'au moins au quadrant, un connecteur configuré pour recevoir un outil, ledit connecteur est préférentiellement disposé sur l'avant-bras dudit au moins un quadrant, par exemple au niveau de sa deuxième extrémité 22.

### Formes des membres d'un quadrant

Dans un mode préféré de réalisation, les corps formant le bras B et l'avant-bras AB d'un quadrant Q sont formés par deux coques assemblées de manière réversible, délimitant un espace interne creux. Cet espace interne creux permet avantageusement notamment le stockage des batteries pour l'alimentation des moteurs, le passage des câbles d'alimentation des moteurs, ou encore le rangement d'outils.

Les figures 9 et 10 illustrent un premier exemple de réalisation non limitatif de la forme des torse et épaule d'un quadrant. La figure 9 présente une vue assemblée et une vue en éclaté du premier quadrant. L'exemple de la figure 10 est illustré pour le premier quadrant Q1 du système robotisé, mais peut s'appliquer à n'importe quel quadrant.

Le torse T1 du premier quadrant se présente sous la forme d'un corps 11, globalement cylindrique, d'axe longitudinal, le premier axe Z11. Le torse T1 comporte en outre des moyens pour former une liaison pivot avec l'avant-bras AB4 du quatrième quadrant, d'axe Yf4. Lesdits moyens du torse T1 comprennent avantageusement un pion 12, cylindrique, s'étendant radialement depuis le corps 11, et destiné à être inséré dans un logement cylindrique complémentaire réalisé dans l'épaisseur de l'avant-bras AB4 du quatrième quadrant Q4, au niveau de la deuxième extrémité 42 dudit avant-bras.

L'épaule E1 du premier quadrant Q1 se présente sous la forme d'un corps 23, globalement cylindrique, d'axe longitudinal, le premier axe Z11. L'épaule E1 comporte en outre des moyens pour former une liaison pivot avec le bras B1 du premier quadrant, d'axe Y21. Lesdits moyens de l'épaule E1 comprennent avantageusement un pion 24, cylindrique, s'étendant radialement depuis le corps 23, et destiné à être inséré dans un logement cylindrique complémentaire réalisé dans l'épaisseur du bras B1, au niveau de la première extrémité 31 dudit bras.

L'épaule E1 est positionnée au-dessus du torse T1, avec leurs axes longitudinaux respectifs coaxiaux. Dans un exemple non limitatif de réalisation, le torse T1 s'emboîte dans la bague interne d'un roulement à billes et l'épaule E1 s'emboite **autour** de la bague externe du roulement à billes. Les deux membres et le roulement au milieu sont traversés par un axe métallique centré sur l'axe du roulement à billes au milieu. L'axe métallique est préférentiellement maintenu par un second roulement à billes dans le torse T1 et un autre roulement à billes dans l'épaule E1 pour renforcer la liaison.

Le corps 23 de l'épaule E1 est préférentiellement creux, comme illustré sur la figure 9, de telle sorte qu'il peut recevoir le premier moteur M1 destiné à gérer la première articulation du premier quadrant Q1.

Dans une variante de réalisation, l'épaule E1 est positionnée en-dessous du torse T1, avec leurs axes longitudinaux respectifs coaxiaux. Le corps 11 du torse T1 est creux de telle sorte qu'il peut recevoir le premier moteur destiné à gérer la première articulation du premier quadrant Q1.

A titre illustratif de ce premier exemple de réalisation, et de sa variante, la figure 10 représente les premier et deuxième quadrants Q1, Q2 assemblés par l'articulation fin de quadrant AQ1 du premier quadrant et l'avant-bras AB4 du quatrième quadrant assemblé au premier quadrant Q1 par l'articulation fin de quadrant AQ4 du quatrième quadrant Q4. Le torse T1 du premier quadrant Q1 présente une forme similaire à l'épaule E2 du deuxième quadrant Q2 et l'épaule E1 du premier quadrant Q1 présente une forme similaire au torse T2 du deuxième quadrant Q2. Ainsi, :
- Pour le premier quadrant Q1 :
   ∘ l'épaule E1 est disposée au-dessus du torse T1 ;
   ∘ le corps 23 de l'épaule E1 reçoit le premier moteur M1 destiné à gérer la première articulation du premier quadrant Q1 ;
   ∘ la pièce d'appui PA1 est liée à la pièce la plus basse de l'ensemble torse-épaule, ici le torse T1 ;
- Pour le deuxième quadrant Q2 :
   ∘ le torse T2 est disposé au-dessus de l'épaule E2,
   ∘ le corps 11 du torse T2 reçoit le premier moteur M1 destiné à gérer la première articulation du deuxième quadrant Q2 ;
   ∘ la pièce d'appui PA2 est liée à la pièce la plus basse de l'ensemble torse-épaule, ici l'épaule E2.

Le bras B1 et l'avant-bras AB1 du premier quadrant Q1 présentant une même longueur, un tel agencement permet avantageusement de conserver la première extrémité 31 du bras B1 et la deuxième extrémité 42 de l'avant-bras AB1 du premier quadrant Q1 sensiblement à une même hauteur par rapport au sol, lorsque le sol est plat et que les pièces d'appui PA1, PA2 des premier et deuxième quadrants Q1, Q2 sont sensiblement similaires. Un tel agencement permet d'éviter que le système robotisé 100 soit penché.

Un tel agencement est préférable lorsque le système robotisé 100 comporte un nombre pair de quadrants.

Ainsi, dans l'exemple d'un système robotisé 100 à quatre quadrants, les premier et troisième quadrants Q1, Q3 présentent des torses T1, T3 et épaules E1, E3 similaires, et les deuxième et quatrième quadrants Q2, Q4 présentent des torses T2, T4 et épaules E2, E4 similaires.

De manière générale, le bras, respectivement l'avant-bras, d'un quadrant est respectivement lié au membre attenant (épaule, respectivement torse) sur la pièce haute de l'ensemble torse-épaule associé.

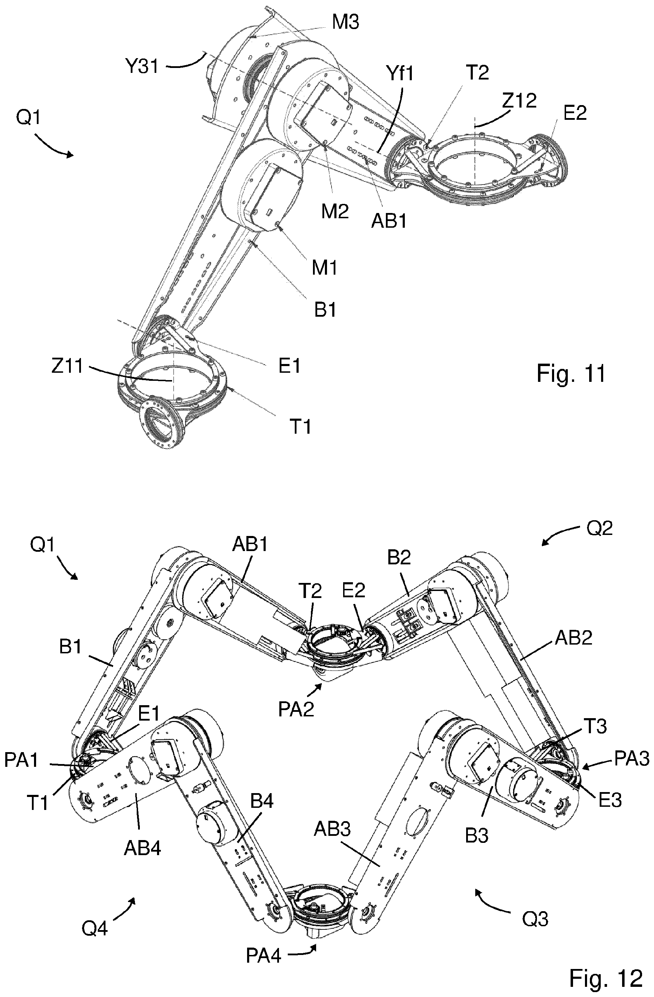

La figure 11 illustre un deuxième exemple de réalisation non limitatif de la forme des torse et épaule d'un quadrant. L'exemple de la figure 11 est illustré pour le premier quadrant Q1 du système robotisé 100, mais peut s'appliquer à n'importe quel quadrant. La figure 11 illustre l'ensemble torse T1-épaule E1 du premier quadrant Q1 et l'ensemble torse T2-épaule E2 du deuxième quadrant. Seul l'ensemble torse T1-épaule E1 du premier quadrant Q1 est décrit.

L'ensemble torse T1 -épaule E1 dudit premier quadrant comporte deux pièces annulaires, ou cerclages, préférentiellement de forme circulaire. Une pièce annulaire intérieure forme l'épaule E1 et une pièce annulaire extérieure forme le torse T1. L'épaule E1 et le torse T1 sont disposés orthogonalement au premier axe Z11, le centre de ladite épaule et dudit torse étant situés sur le premier axe Z11. La liaison pivot autorisant la rotation selon le premier axe Z11 entre l'épaule E1 et le torse T1 est réalisée au moyen de roulements à billes.

Une telle forme de réalisation de l'épaule E1 et du torse T1 permet le positionnement d'une pièce d'appui (non représentée sur la figure), telle que par exemple une balle, à l'intérieur de l'épaule E1 et du torse T1 et de réduire avantageusement l'encombrement du système robotisé 100. La pièce d'appui est liée soit à l'épaule, soit au torse.

Les membres torse T, épaule E, bras B, avant-bras AB d'un quadrant Q peuvent prendre d'autres formes différentes de celles décrites sans se départir du cadre de l'invention.

Les formes décrites ci-avant des membres sont non exhaustives et d'autres formes peuvent être réalisées, dès lors qu'elles permettent les rotations nécessaires entre deux membres successifs.

### Forme d'une pièce d'appui

Comme décrit précédemment, le système robotisé 100 comporte en outre, au niveau de chaque quadrant, une pièce d'appui PA destinée à venir en contact avec une surface d'appui.

La pièce d'appui PA est préférentiellement liée soit au torse T soit à l'épaule E d'un quadrant.

Dans l'exemple des figures 9 et 10, la pièce d'appui PA1 du premier quadrant Q1 est liée au torse T1. La pièce d'appui PA2 du deuxième quadrant Q2 est liée à l'épaule E2.

Dans un exemple amélioré de réalisation de la pièce d'appui, comme illustré sur les figures 9 et 10, la pièce d'appui PA1, PA2 du premier quadrant ou du deuxième quadrant comporte, outre une roue 51, une pièce additionnelle, dénommée bassin 52, disposée entre la roue 51 et le torse ou l'épaule. Le bassin 52 et la roue 51 forme un module roue.

Le bassin 52 du module roue associé au premier quadrant Q1 est positionné en-dessous du torse T1, avec leurs axes longitudinaux respectifs coaxiaux, et lié audit torse T1 par une liaison pivot autorisant une rotation autour du premier axe Z11, permettant d'orienter la roue. La roue 51 est liée au bassin 52 par une liaison pivot autorisant la rotation de la roue selon l'axe de la roue, ledit axe de la roue étant orthogonal au premier axe Z11.

Dans d'autres exemples de réalisation de la pièce d'appui, non représentés, la pièce d'appui peut être une roue de type Mecanum, un pied avec un amortisseur ou une roue avec un amortisseur.

Autre exemple de réalisation du système robotisé selon la troisième configuration :
Les figures 12 à 27 illustrent un exemple préféré de réalisation d'un système robotisé selon la troisième configuration.

Les spécificités décrites pour la troisième configuration ci-dessus sont reprises.

Dans cet exemple de réalisation, toutes les articulations n'autorisent qu'une rotation autour d'un axe. Les articulations sont du type liaison pivot, ne permettant qu'un degré de liberté en rotation, en combinaison ou non avec des liaisons fixes.

La figure 12 illustre un système robotisé comportant quatre quadrants Q1, Q2, Q3, Q4 comportant chacun quatre membres, de manière non limitative. Chaque quadrant Q1, Q2, Q3, Q4 est équipé d'une pièce d'appui PA1, PA2, PA3, PA4 de type roue ou pied. Un connecteur (non visible sur la figure 12) permettant de désolidariser le quatrième quadrant Q4 du premier quadrant Q1 est positionné entre l'avant-bras AB4 du quatrième quadrant Q4 et le torse T1 du premier quadrant Q1.

La figure 13 illustre un des quadrants du système robotisé de la figure 12, à titre d'exemple non limitatif, le premier quadrant Q1. La figure 14 représente une vue en éclaté du quadrant de la figure 13. Tel qu'illustré sur les figures 13 et 14, le torse T1 est équipé d'un pied 54.

La poulie centrale 82 est mise en évidence sur la figure 14. Dans cet exemple de réalisation, la poulie centrale 82 appartient à la troisième articulation du premier quadrant Q1 reliant le bras B1 par une première liaison pivot et l'avant-bras AB1 par une deuxième liaison pivot. La poulie centrale 82 est liée rigidement à une première pièce 821, elle-même fixée sur le rotor du deuxième moteur M2. Le stator du deuxième moteur M2 est quant à lui lié au bras B1. Ladite première liaison pivot est donc formée par le deuxième moteur M2 est sa liaison pivot interne entre son stator et son rotor. La poulie centrale 82 est liée rigidement à une seconde pièce 822, elle-même fixée sur le rotor du troisième moteur M3. Le stator du troisième moteur M3 est quant à lui lié à l'avant-bras AB1. Ladite deuxième liaison pivot est donc formée par le troisième moteur M3 est sa liaison pivot interne entre son stator et son rotor. Les axes de rotation interne des deuxième et troisième moteurs M2, M3 sont avantageusement colinéaires avec le troisième axe Y31. La troisième articulation est ainsi formée par les deuxième et troisième moteurs M2, M3 et la poulie centrale 82.

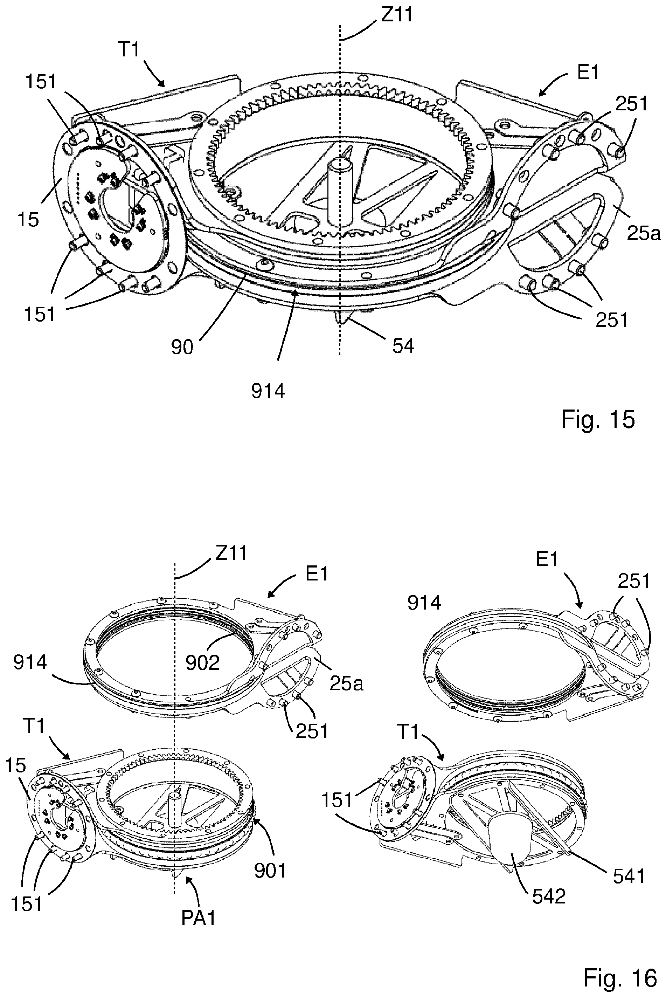

La figure 15 illustre un agrandissement de l'ensemble torse T1-épaule E1, équipé du pied 54, du premier quadrant de la figure 13. La figure 16 représente deux vues en éclaté de l'ensemble de la figure 15, une première vue en éclaté, vue en perspective par-dessus et une deuxième vue en éclaté, vue en perspective par-dessous. L'épaule E1 comportent, au niveau d'une extrémité 25a, des vis 251 pour sa fixation à la deuxième articulation le liant au bras B1.

Le torse T1 comportent, au niveau d'une extrémité 15, des vis 151 pour sa fixation à l'articulation fin de quadrant du quadrant précédent le liant au dernier membre du quadrant précédent. Dans l'exemple, les vis 151 du torse T1 permettent de le fixer à l'articulation fin du quadrant du quatrième quadrant Q4 le liant à l'avant-bras AB4 dudit quatrième quadrant.

L'extrémité 25a de l'épaule E1 se fixe avantageusement sur un roulement à billes (non représenté) composant la deuxième articulation avec le bras B1.

L'extrémité 15 du torse T1 se fixe avantageusement sur un roulement à billes (non représenté) composant l'articulation fin de quadrant du quadrant précédent avec l'avant-bras dudit quatrième quadrant.

L'épaule E1 est assemblée sur le torse T1 au moyen d'un roulement à billes 90. le roulement à bille comporte une bague interne 901, dont on distingue les billes sur la figure 16, et d'une bague externe 902. Ledit roulement à billes 90 forme la première articulation du premier quadrant Q1. La première articulation forme ainsi une liaison pivot, autorisant uniquement une rotation autour du premier axe Z11.

La vue en éclaté, vue en perspective de dessous, de la figure 16 illustre un exemple de réalisation d'un pied 54 et de son assemblage sur le torse T1. Le pied 54 comporte une pièce de fixation 541 et un patin P12, par exemple en caoutchouc. Le patin 542 sert de surface de contact avec une surface d'appui. La pièce de fixation 541 permet avantageusement de lier le patin 542 au torse T1 au travers d'une liaison fixe.

Dans l'exemple des figures 15 et 16, la motorisation de la première articulation est déportée, le premier moteur M1 (non représenté) étant situé sur une pièce attenante (non représentée) pour alléger le torse T1 et l'épaule E1, et la puissance est transmise par un système de câbles (non représenté sur les figures). Des rainures 914 dans lesquelles les câbles circulent en s'enroulant autour de l'épaule E1, sont représentées sur la figure 16.

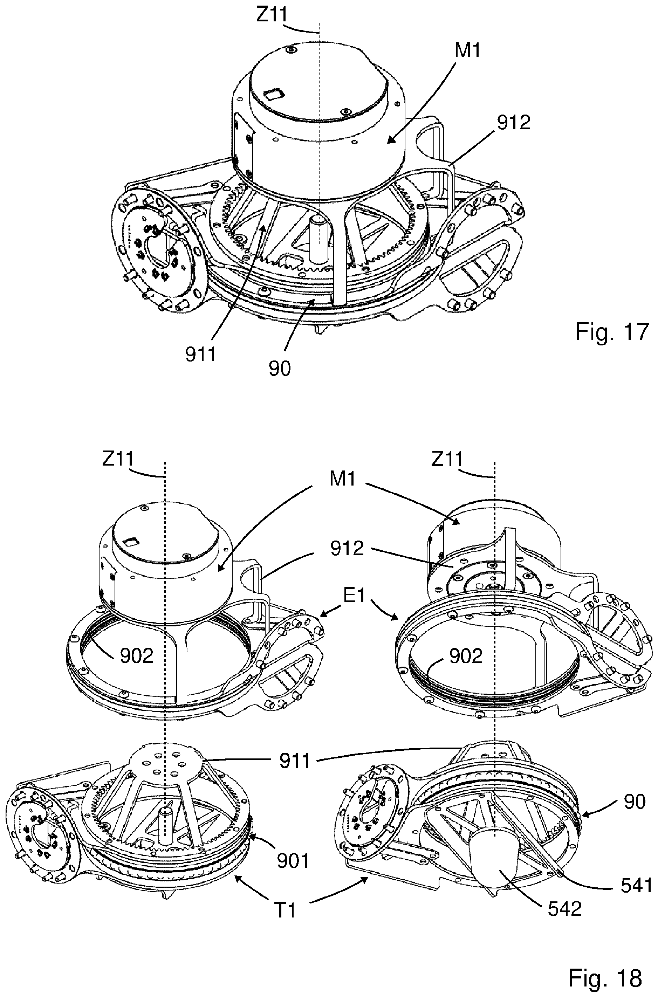

Les figures 17 et 18 représentent un même ensemble torse T1-épaule E1 que celui des figures 15 et 16, mais avec une motorisation différente pour la première articulation. Dans les figures 17 et 18, le premier moteur M1, celui motorisant de la première articulation, est situé sur la première articulation, avec un axe de rotation colinéaire au premier axe Z11. Une première pièce 911 est fixée au stator du premier moteur M1 et à l'épaule E1. Une deuxième pièce 912 est fixée au rotor du premier moteur M1 et au torse T1. L'ensemble des éléments : premier moteur M1, première pièce 911, deuxième pièce 912, roulement à billes 90, bague interne 901, bague externe 902 dudit roulement à billes 90 composent et motorisent la première articulation selon le premier axe Z11.

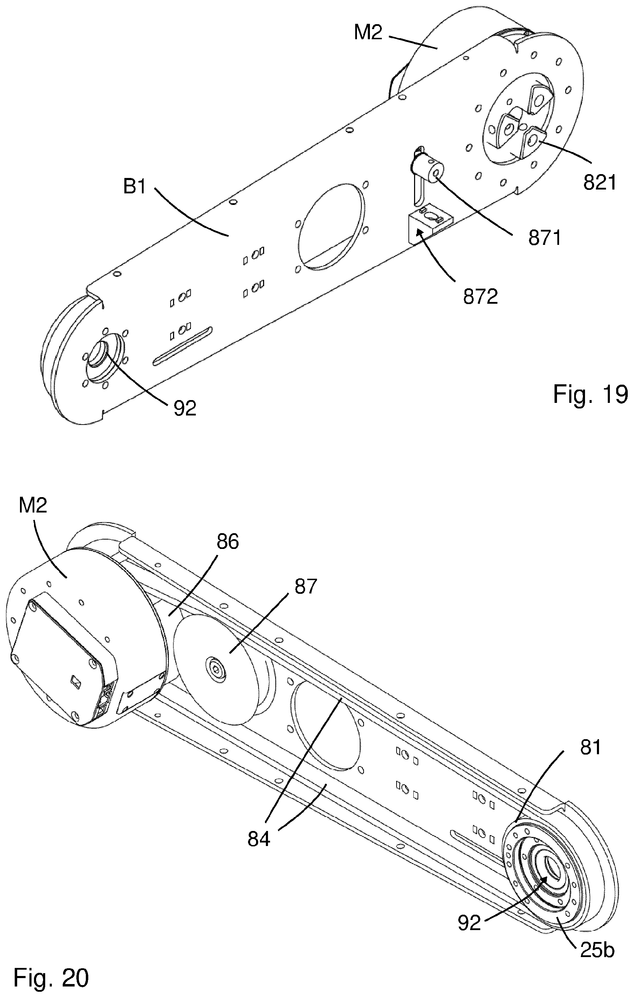

Les figures 19 et 20 illustre le bras B1 du premier quadrant de la figure 13. Sur ces figures, est représenté un élément 25b, complémentaire à l'extrémité 25a (illustré figure 16) de l'épaule E1, disposé sur un roulement à billes 92 composant la deuxième articulation avec le bras B1. On identifie également le deuxième moteur M2 dont le stator est fixé au bras B1 et le rotor est fixé à la première pièce 821, pour composer, avec la poulie centrale 82, la troisième articulation du premier quadrant. Le système motorisé décrit ici ne comporte pas de moteur sur la deuxième articulation. L'actionnement de la deuxième articulation du premier quadrant Q1 est assuré par un système de poulies et courroies ou câbles qui constitue un système de contrainte. Ladite deuxième articulation est reliée à la première courroie 84 avec la première poulie 81. La troisième articulation du premier quadrant est reliée à la première courroie 84 par une troisième poulie 86. La première poulie 81 et la troisième poulie 86 sont encastrées sur une bague externe des roulements à billes constituant les deuxième et troisième articulations. Le deuxième moteur M2 est partagé par les deuxième et troisième articulations. Un tendeur 87 permet avantageusement de régler la tension de la première courroie 84. La figure 19 illustre un point de fixation 871 du tendeur 87 sur le bras B1. Une vis 872 permet avantageusement de régler la hauteur du point de fixation 871 du tendeur 87 au bras B1. Ainsi, en agissant sur la vis 872, on agit directement sur la hauteur du point de fixation 871 et donc du tendeur 87, ce qui permet de régler la tension de la première courroie 84.

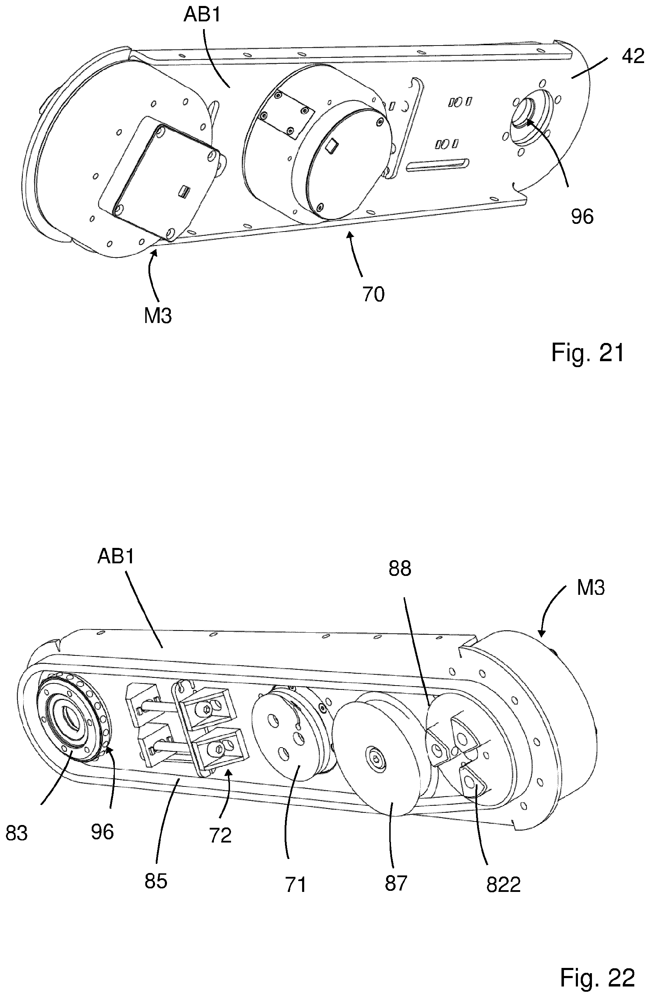

Les figures 21 et 22 illustre l'avant-bras AB1 du premier quadrant de la figure 13. L'avant-bras AB1 présente un comportement similaire au bras B1. Notamment, est représenté le troisième moteur M3 et la seconde pièce 822, liée à la poulie centrale 82, homologues du deuxième moteur M2 et de la première pièce 821, liée à la poulie centrale 82, du bras B1. De même, un système de poulies et courroies pour l'avant-bras AB1 comportant la deuxième poulie 83, une quatrième poulie 88, la deuxième courroie 85 et un tendeur 87, équivalents à la première poulie 81, la troisième poulie 86, la première courroie 84 et le tendeur 87 constituant le système de poulies et courroies du bras B1. On devine également un roulement à billes 96 composant l'articulation fin de quadrant AQ1 du premier quadrant Q1. Une bague interne dudit roulement à billes 96 est fixée au niveau de l'avant-bras AB1 et une bague externe dudit roulement à billes 96 est destinée à être fixée au torse T2 du deuxième quadrant Q2.

Sur ces figures 21 et 22, sont également illustrés des éléments 70, 71 et 72 de la motorisation de la première articulation du deuxième quadrant Q2, dans le cas où la motorisation de la première articulation dudit deuxième quadrant est déportée sur le premier quadrant Q1. L'épaule E2 du deuxième quadrant Q2 comporte en outre des rainures (non illustrées), de manière identique aux rainures 914 de l'épaule E1 du premier quadrant. Les éléments 70, 71, 72 et lesdites rainures de l'épaule E2 du deuxième quadrant composent la motorisation déportée de la première articulation du deuxième quadrant Q2. L'élément 70 est un moteur. L'élément 71 est une poulie autour de laquelle viennent s'enrouler des câbles de transmission de puissance. L'élément 72 est un support de gaine. Les câbles partant de la poulie 71 sont guidés par des gaines supportées par le support de gaine 72. Lesdites gaines guident les câbles jusqu'aux rainures de l'épaule E2 du deuxième quadrant autour desquelles ils s'enroulent. Lesdits câbles sont ainsi enroulés autour de l'épaule E2 et de la poulie 71. Lorsque la poulie 71 est mise en rotation par le moteur 70, la puissance est transmise à l'épaule E2 par lesdits câbles.

L'ensemble moteur 70, poulie 71, support de gaine 72 peut sans modification être installé sur le bras B2 du deuxième quadrant Q2 au lieu d'être installé sur l'avant-bras du premier quadrant.

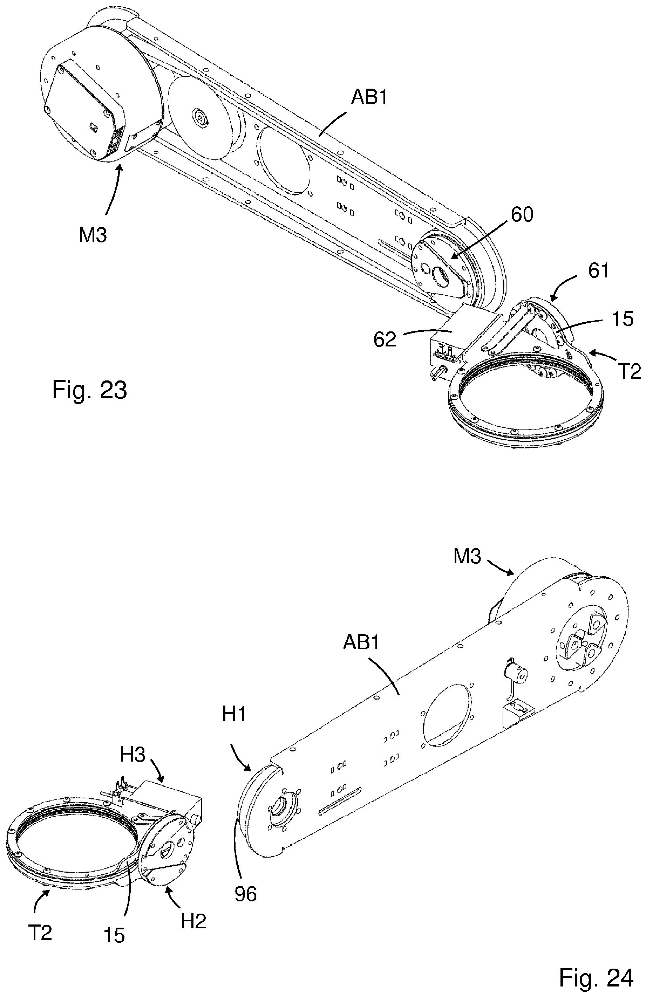

Les figures 23 et 24 illustrent un exemple de système de verrouillage/déverrouillage configuré pour désolidariser, de manière réversible, le premier quadrant du deuxième quadrant, au niveau de l'articulation fin de quadrant AQ1 du premier quadrant. L'avant-bras AB1 du premier quadrant Q1 est lié au torse T2 du deuxième quadrant Q2 par ladite articulation fin de quadrant AQ1 du premier quadrant Q1. Dans ce cas, ladite articulation fin de quadrant AQ1 du premier quadrant Q1 est composée d'une première liaison pivot composée d'un roulement à billes 96. Une bague interne du roulement 96 est fixée à l'avant-bras AB1 du premier quadrant. Comme pour l'avant-bras décrit précédemment, cette liaison pivot est actionnée par un système de courroies et câbles la liant à la troisième articulation et au troisième moteur M3. L'articulation fin de quadrant AQ1 du premier quadrant Q1 est également composée d'une liaison fixe entre le pré-torse et le torse T2 du deuxième quadrant. Cette liaison fixe peut être verrouillée et déverrouillée. Le pré-torse est préférentiellement fixé rigidement à une bague externe du roulement à billes 96, donc après la liaison pivot formé par le roulement à billes 96. La liaison fixe est préférentiellement réalisée par deux éléments 60 et 61. L'élément 60 de la liaison fixe est fixé sur le pré-torse et l'élément 61 est fixé sur le torse T2, au niveau d'une extrémité 15 dudit torse T2 du deuxième quadrant. Les éléments 60 et 61 de la liaison fixe s'emboitent mécaniquement. Lorsque les éléments 60 et 61 de la liaison fixe sont totalement emboités, un électroaimant 62 active un verrou venant verrouiller la liaison fixe. En désactivant le verrou, il est alors possible de désolidariser ladite liaison fixe et séparer l'avant-bras AB1 du premier quadrant Q1 du torse T2 du deuxième quadrant Q2.

Il est clair que le système de verrouillage/déverrouillage décrit aux figures 23 et 24 peut être adapté à toute autre configuration de quadrant, avec un nombre de membres et un fonctionnement différent. Le système de verrouillage/déverrouillage peut être positionné sur toute les articulations du système robotisé.

Le système de verrouillage/déverrouillage décrit aux figures 23 et 24 peut avantageusement être adapté à un connecteur d'outils pour équiper le système robotisé d'outils amovibles. Un tel connecteur peut par exemple être positionné sur l'avant-bras AB1 du premier quadrant. En se reportant à la figure 21, l'élément 61 de la liaison fixe et l'électroaimant 62 pourraient se positionner au niveau de la deuxième extrémité 42 de l'avant-bras AB1 du premier quadrant et l'élément 60 de la liaison fixe, au niveau de l'outil à connecter.

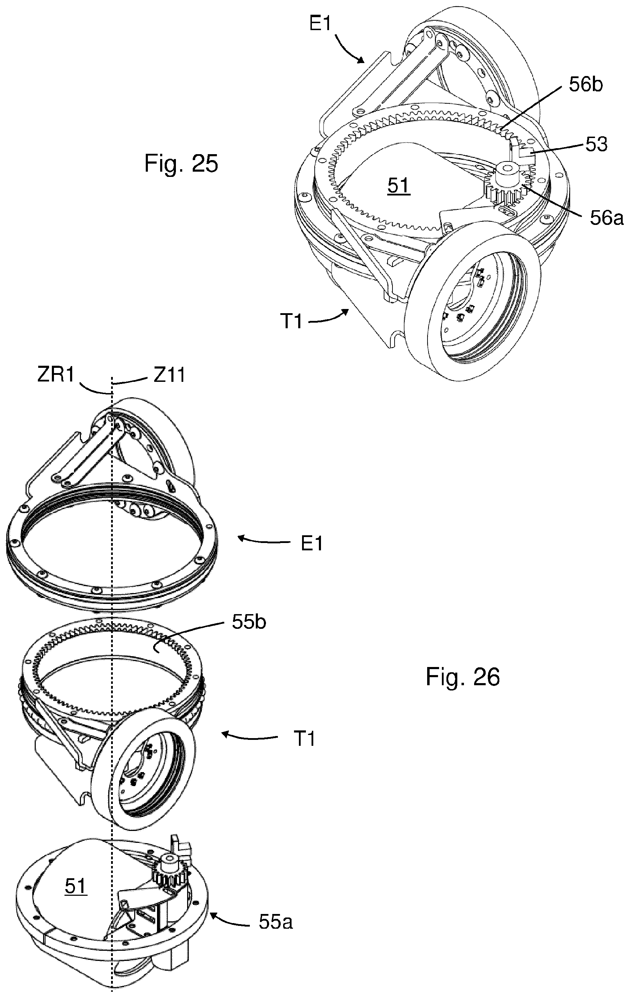

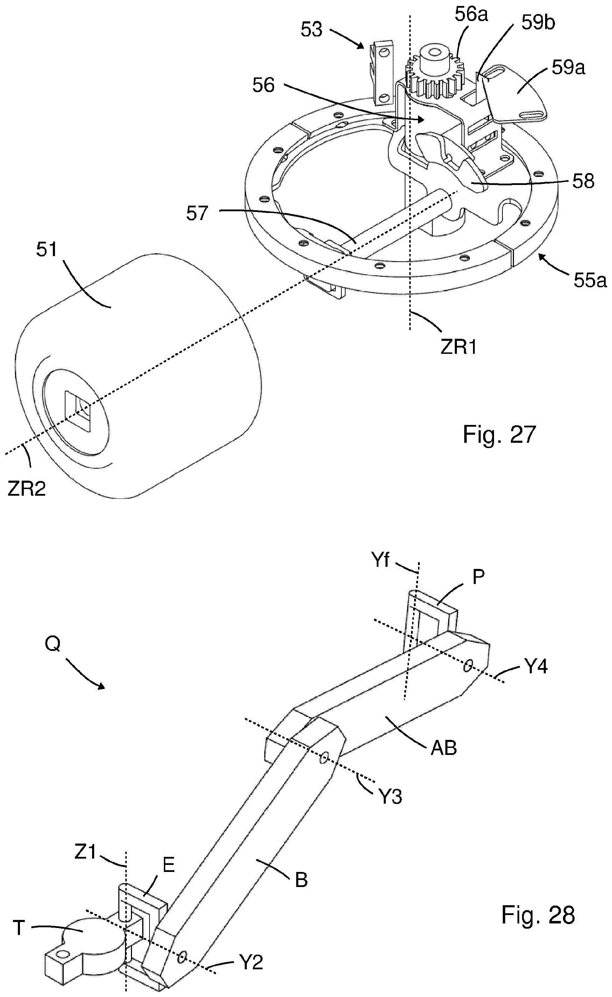

Les figures 25 à 27 illustrent un ensemble torse-épaule identique à ceux présentés aux figures 15 à 18, mais équipé d'un ensemble roue à la place d'un pied. La première articulation entre le torse T1 et l'épaule E1 est ici réalisée par le système de câbles décrit aux figures 15 et 16 mais pourrait parfaitement être réalisée avec le système de transmission directe décrit aux figures 17 et 18. L'ensemble roue est fixé au torse T1 par une première liaison pivot d'axe ZR1. L'axe ZR1 est préférentiellement colinéaire au premier axe Z11 de la première articulation entre le torse T1 et l'épaule E1 du premier quadrant Q1. Dans une variante, l'axe ZR1 n'est pas colinéaire au premier axe Z1. Cette première liaison pivot d'axe ZR1 de l'ensemble roue peut par exemple être réalisée avec un palier glissant 55a inséré dans une rainure 55b du torse T1 (voir figure 26). Le palier glissant 55a remplit une fonction similaire à celle d'un roulement à billes, mais à moindre coût. La motorisation de cette première liaison pivot d'axe ZR1 est assuré par un moteur 56 qui actionne un engrenage 56a configuré pour mettre la roue en rotation autour de l'axe ZR1 par interaction avec une glissière circulaire 56b. La figure 27 illustre une fourche optique 53 configurée pour capter les déplacements de ladite liaison pivot. L'ensemble roue comporte une deuxième liaison pivot d'axe ZR2 et qui permet de mettre une roue 51 en rotation. Cette deuxième liaison pivot de l'ensemble roue est motorisée par un moteur (non représenté) situé dans la roue 51. La roue 51 tourne ainsi autour d'un axe 57 (visible en figure 27). La figure 27 illustre également un élément de structure 58 agissant comme un frein sur la roue 51. Dans l'exemple non limitatif des figures 25 à 27, le frein 58 est appuyé sur la roue 51 par la rotation de l'ensemble roue par rapport au torse T1 grâce à la forme adaptée d'une pièce 59a liée rigidement au torse T1. Lorsque l'orientation de l'ensemble roue est propice, une languette 59b glisse sur la pièce 59a et de ce fait avance l'élément de structure 58 en emboitement dans la roue. Cela permet avantageusement de s'affranchir de l'utilisation d'un actionneur spécifique au frein.

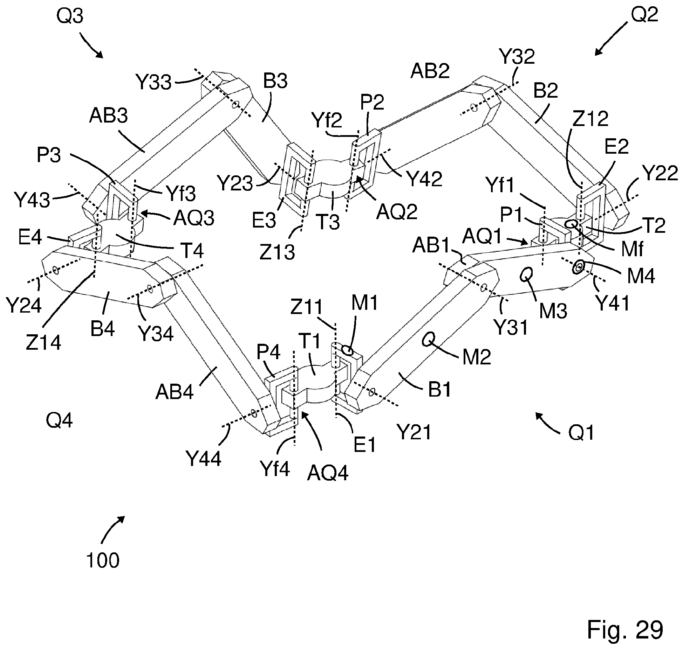

### D - Système robotisé comportant au moins un quadrant à cinq membres (figures 28 et 29)

Dans une quatrième configuration, comme illustré sur la figure 28, un quadrant Q du système robotisé 100 comporte cinq membres successifs.

Dans l'exemple non limitatif de la figure 28, le système robotisé 100 comporte quatre quadrants Q1, Q2, Q3, Q4, comportant chacun quatre membres. Bien que les quadrants soient illustrés sur la figure 28 et décrits au nombre de quatre, le nombre de ces quadrants n'est pas limité à celui décrit et illustré. Ainsi, il est possible de réaliser un système robotisé avec trois quadrants, cinq quadrants ou plus, sans se départir du cadre de l'invention.

Cette quatrième configuration reprend tous les éléments (membres, articulations) décrits dans la deuxième configuration.

Ainsi, de manière générale, et comme illustré de manière schématique sur la figure 28, un quadrant Q selon la quatrième configuration comporte successivement, outre le torse T, l'épaule E, le bras B, et l'avant-bras AB, un cinquième membre, dénommé poignet P.

Dans cette quatrième configuration, l'avant-bras AB forme ainsi le dernier membre du quadrant Q.

Comme pour les trois configurations précédentes :
- l'épaule E est liée au torse T par la première articulation,
- le bras B est lié à l'épaule E par la deuxième articulation,
- l'avant-bras AB est lié au bras B par la troisième articulation.

La première articulation autorise au moins une rotation d'un premier axe Z1.

De préférence, et comme illustré sur la figure 28, la première articulation autorise uniquement une rotation autour du premier axe Z1.

La deuxième articulation autorise au moins une rotation autour d'un deuxième axe Y2. Le deuxième axe Y2 est préférentiellement orthogonal au premier axe Z1.

De préférence, et comme illustré sur la figure 28, la deuxième articulation autorise uniquement une rotation autour du deuxième axe Y2.

La troisième articulation autorise au moins une rotation autour d'un troisième axe Y3. Le troisième axe Y3 est préférentiellement parallèle au deuxième axe Y2.

De préférence, et comme illustré sur la figure 28, la troisième articulation autorise uniquement une rotation autour du troisième axe Y3.

Le poignet P est, quant à lui, lié à l'avant-bras AB par une articulation, dite quatrième articulation.

Ladite quatrième articulation autorise au moins une rotation autour d'un quatrième axe Y4. Le quatrième axe Y4 est préférentiellement parallèle au deuxième axe Y2 et au troisième axe Y3.

De préférence, et comme illustré sur la figure 28, la quatrième articulation autorise uniquement une rotation autour du quatrième axe Y4.

De préférence, les première, deuxième, troisième et quatrième articulations du quadrant Q sont chacune réalisées par une liaison pivot, par exemple au moyen d'un palier lisse ou encore de roulements à billes. Il est également possible de réaliser la troisième articulation du quadrant à partir d'une combinaison de deux liaisons pivot de même axe.

Le torse T, l'épaule E, le bras B, l'avant-bras AB et le poignet d'un quadrant Q peuvent prendre diverses formes, dès lors que ces formes ne limitent pas le mouvement de l'épaule E par rapport au torse T, obtenu via la première articulation, ni le mouvement du bras par rapport à l'épaule E, obtenu via la deuxième articulation, le mouvement de l'avant-bras AB par rapport au bras B, obtenu via la troisième articulation, ni le mouvement du poignet P par rapport à l'avant-bras AB, obtenu via la quatrième articulation.

Dans un exemple préféré de réalisation, les formes du torse T, de l'épaule E, du bras B et de l'avant-bras AB, et de leurs différentes variantes, décrites pour la troisième configuration de quadrant peuvent s'appliquer au torse T, à l'épaule E, au bras B et à l'avant-bras AB de la quatrième configuration du quadrant.

Dans un exemple préféré de réalisation, la forme du poignet est sensiblement similaire à celle de l'épaule.

L'articulation fin de quadrant AQ du quadrant Q lie le poignet P dudit quadrant au torse du quadrant suivant.

Ladite articulation fin de quadrant AQ autorise au moins une rotation autour d'un axe de rotation Yf. Ledit axe de rotation est parallèle au premier axe de la première articulation du quadrant.

De préférence, comme illustré sur les figures 28 et 29, l'articulation fin de quadrant AQ du quadrant Q autorise uniquement une rotation autour de l'axe de rotation Yf.

La forme du torse T du quadrant, outre le fait qu'elle ne doit pas limiter la rotation autour du premier axe Z1 du torse T par rapport à l'épaule E, par la première articulation, ne doit pas également limiter la rotation autour de l'axe de rotation Yf du poignet du quadrant précédent par rapport audit torse du quadrant, par l'articulation fin de quadrant du quadrant.

Dans une forme de réalisation d'une articulation fin de quadrant AQ, ladite articulation fin de quadrant AQ est réalisée par une liaison pivot entre le poignet du quadrant et le torse du quadrant suivant, par exemple au moyen d'un palier lisse ou encore de roulements à billes.

Dans une autre forme de réalisation d'une articulation fin de quadrant AQ, ladite articulation fin de quadrant AQ est réalisée à partir d'une combinaison d'une liaison pivot et d'une liaison sans degré de liberté.

Dans un exemple préféré de réalisation, non représenté, l'articulation fin de quadrant d'un quadrant comporte une pièce auxiliaire, nommée pré-torse, liée d'une part au poignet du quadrant par une liaison pivot autorisant une rotation autour de l'axe de rotation Yf et d'autre part au torse du quadrant suivant par une liaison sans degré de liberté.

Dans un mode de réalisation, lorsqu'un quadrant Q comporte une pièce d'appui PA, ladite pièce d'appui PA est préférentiellement liée soit au torse T soit à l'épaule E du quadrant.

Dans un exemple préféré de réalisation, les diverses formes de la pièce d'appui PA, pied, roue, bassin/roue, décrites pour la troisième configuration de quadrant peuvent être aussi adaptées dans cette quatrième configuration de quadrant.

En revenant à présent à l'exemple de la figure 29, où le système robotisé 100 comporte quatre quadrants, chaque quadrant se présente sous la forme décrite ci-dessus.

Ainsi, par analogie, un premier quadrant Q1 comporte :
- un torse T1,
- une épaule E1, liée au torse T1 par une première articulation autorisant une rotation autour d'un premier axe Z11,
- un bras B1, lié à l'épaule E1 par une deuxième articulation autorisant une rotation autour d'un deuxième axe Y21,
- un avant-bras AB1, lié au bras B1 par une troisième articulation autorisant une rotation autour d'un troisième axe Y31,
- un poignet P1, lié à l'avant-bras AB1 par une quatrième articulation autorisant une rotation autour d'un quatrième axe Y41.

Les axes Z11 et Y21 sont orthogonaux. Les axes Y21, Y31 et Y41 sont parallèles.

Un deuxième quadrant Q2 comporte :
- un torse T2,
- une épaule E2, liée au torse T2 par une première articulation autorisant une rotation autour d'un premier axe Z12,
- le bras B2, lié à l'épaule E2 par une deuxième articulation autorisant une rotation autour d'un deuxième axe Y22,
- un avant-bras AB2, lié au bras B2 par une troisième articulation autorisant une rotation autour d'un troisième axe Y32,
- un poignet P2, lié à l'avant-bras AB2 par une quatrième articulation autorisant une rotation autour d'un quatrième axe Y42.

Les axes Z12 et Y22 sont orthogonaux. Les axes Y22, Y32 et Y42 sont parallèles.

Un troisième quadrant Q3 comporte :
- un torse T3,
- une épaule E3, liée au torse T3 par une première articulation autorisant une rotation autour d'un premier axe Z13,
- le bras B3, lié à l'épaule E3 par une deuxième articulation autorisant une rotation autour d'un deuxième axe Y23,
- un avant-bras AB3, lié au bras B3 par une troisième articulation autorisant une rotation autour d'un troisième axe Y33,
- un poignet P3, lié à l'avant-bras AB3 par une quatrième articulation autorisant une rotation autour d'un quatrième axe Y43.

Les axes Z13 et Y23 sont orthogonaux. Les axes Y23, Y33 et Y43 sont parallèles.

Un quatrième quadrant Q4 comporte :
- un torse T4,
- une épaule E4, liée au torse T4 par une première articulation autorisant une rotation autour d'un premier axe Z14,
- le bras B4, lié à l'épaule E4 par une deuxième articulation autorisant une rotation autour d'un deuxième axe Y24,
- un avant-bras AB4, lié au bras B4 par une troisième articulation autorisant une rotation autour d'un troisième axe Y34,
- un poignet P4, lié à l'avant-bras AB4 par une quatrième articulation autorisant une rotation autour d'un quatrième axe Y44.

Les axes Z14 et Y24 sont orthogonaux. Les axes Y24, Y34 et Y44 sont parallèles.

Le premier quadrant Q1 (respectivement deuxième quadrant Q2, troisième quadrant Q3, quatrième quadrant Q4) comporte une articulation fin de quadrant AQ1 (respectivement AQ2, AQ3, AQ4) le liant au deuxième quadrant Q2 (respectivement troisième quadrant Q3, quatrième quadrant Q4, premier quadrant Q1). Ladite première articulation AQ1 (respectivement AQ2, AQ3, AQ4) autorise au moins une rotation autour d'un axe de rotation Yf1 (respectivement Yf2, Yf3,Yf4), ledit axe de rotation Yf1 (respectivement Yf2, Yf3,Yf4) étant parallèle au premier axe Z11 (respectivement Z12, Z13, Z14), de la première articulation du premier quadrant Q1 (respectivement deuxième quadrant Q2, troisième quadrant Q3, quatrième quadrant Q4).

De préférence, les divers moyens d'actionnement décrits dans la troisième configuration d'un quadrant peuvent s'adapter à cette quatrième configuration de quadrant.

Ainsi, dans un premier mode de réalisation, chaque articulation des quadrants du système robotisé comporte un moteur associé. Par exemple pour le premier quadrant, comme illustré sur la figure 29 :
- un premier moteur M1 est destiné à piloter et déplacer l'épaule E1 par rapport au torse T1 autour du premier axe Z11,
- un deuxième moteur M2 est destiné à piloter et déplacer le bras B1 par rapport à l'épaule E1 autour du deuxième axe Y21,
- un troisième moteur M3 est destiné à piloter et déplacer l'avant-bras AB1 par rapport au bras B1 autour du troisième axe Y31,
- un quatrième moteur M4 est destiné à piloter et déplacer le poignet P1 par rapport à l'avant-bras AB1 autour du quatrième axe Y41,
- un dernier moteur Mf est destiné à piloter et déplacer le torse T2 du quadrant suivant, soit le deuxième quadrant Q2, par rapport au poignet P1 du premier quadrant Q1 autour de l'axe de rotation Yf1.

Dans un deuxième mode de réalisation (non représenté), ne relevant pas de l'invention, les moyens d'actionnement comportent moins de moteurs que d'articulations. Par exemple, les moyens d'actionnement comportent, par exemple pour le premier quadrant Q1 :
- un premier moteur M1 configuré pour piloter la première articulation du premier quadrant Q1, en déplaçant l'épaule E1 par rapport au torse T1 en rotation autour du premier axe Z11,
- deux moteurs M2, M3, configurés pour piloter deux articulations choisies parmi la deuxième articulation, la troisième articulation et la quatrième articulation du premier quadrant Q1, et un système de poulies et courroies ou câbles reliant la deuxième articulation, la troisième articulation et la quatrième du premier quadrant Q1,
- un dernier moteur Mf configuré pour piloter l'articulation fin de quadrant AQ1 du premier quadrant Q1, en déplaçant le torse T2 du quadrant suivant, soit le deuxième quadrant Q2, par rapport au poignet P1 du premier quadrant Q1 autour de l'axe de rotation Yf1.

Les variantes de réalisation de ce deuxième mode de réalisation décrites dans la troisième configuration d'un quadrant peuvent s'adapter à cette quatrième configuration de quadrant.

Dans un mode de réalisation (non représenté), comme dans la troisième configuration de quadrant, lorsque le système robotisé 100 comporte un dispositif de verrouillage/déverrouillage configuré pour désolidariser deux quadrants successifs, dits quadrant amont et quadrant aval, et lorsqu'une articulation fin de quadrant AQ du quadrant amont comporte un pré-torse, lesdits deux quadrants successifs sont configurés pour pouvoir être désolidarisés de manière réversible, au niveau de la liaison sans degré de liberté reliant le pré-torse du quadrant amont au torse du quadrant aval.

Dans un mode de réalisation (non représenté), comme dans la troisième configuration de quadrant, lorsque le système robotisé 100 comporte, au niveau d'au moins au quadrant, un connecteur configuré pour recevoir un outil, ledit connecteur est préférentiellement disposé sur l'avant-bras dudit au moins un quadrant, par exemple au niveau de sa deuxième extrémité 22.

## Revendications

1. Système robotisé (100) mobile, apte à se déplacer, comportant N structures articulées reliées entre elles deux à deux en série de sorte à former une boucle, N étant un nombre entier positif supérieur ou égal à 3,
chaque structure articulée, dite quadrant (Q1, Q2, Q3), comportant :
- au moins deux membres successifs, dont un premier membre dit torse (T1, T2, T3), et un dernier membre, deux membres successifs du quadrant étant reliés entre eux par une articulation autorisant au moins une rotation autour d'un axe, et
- une articulation, dite articulation fin de quadrant (AQ1, AQ2, AQ3),
l'articulation fin de quadrant d'un quadrant reliant le dernier membre dudit quadrant au torse du quadrant suivant,
au moins un quadrant du système robotisé comporte au moins quatre membres successifs, dont :
- le torse (T1, T2, T3),
- un deuxième membre, dit épaule (E1, E2, E3), lié audit torse par une articulation, dite première articulation, autorisant une rotation autour d'un axe dit premier axe (Z11, Z12, Z13),
- un troisième membre, dit bras (B1, B2, B3), lié à ladite épaule par une articulation, dite deuxième articulation, autorisant une rotation autour d'un axe dit deuxième axe (Y21, Y22, Y23), le deuxième axe étant orthogonal audit premier axe,
- un quatrième membre, dit avant-bras (AB1, AB2, AB3), lié audit bras par une articulation, dite troisième articulation, autorisant une rotation autour d'un axe dit troisième axe (Y31, Y32, Y33), ledit troisième axe étant parallèle audit deuxième axe (Y21, Y22, Y23),
le système robotisé (100) comportant des moyens d'actionnement configurés pour mettre en mouvement tout ou partie des articulations des quadrants,
**caractérisé en ce que** les moyens d'actionnement comportent, pour chacune des articulations constituant le système robotisé, un moteur associé.

2. Système robotisé (100) selon la revendication 1 ne comportant pas de corps central sur lequel viennent se relier chaque quadrant.

3. Système robotisé (100) selon l'une des revendications 1 à 2 dans lequel au moins un quadrant (Q1, Q2, Q3) comporte une pièce d'appui (PA1, PA2, PA3) destinée à venir en contact avec une surface d'appui.

4. Système robotisé (100) selon l'une des revendications 1 à 3 comportant au moins un dispositif de verrouillage/déverrouillage configuré pour désolidariser de manière réversible deux quadrants successifs.

5. Système robotisé (100) selon l'une des revendications 1 à 4 comportant, au niveau d'au moins un quadrant (Q1, Q2, Q3), un connecteur relié, de manière réversible ou non, à un des membres dudit quadrant, et configuré pour recevoir au moins un outil.

6. Système robotisé (100) selon l'une des revendications 1 à 5 dans lequel, lorsque au moins un autre quadrant comporte uniquement trois membres successifs, le bras est le dernier membre et l'articulation fin de quadrant dudit autre quadrant est une liaison rotule.

7. Système robotisé (100) selon l'une des revendications 1 à 6 dans lequel l'articulation fin de quadrant dudit quadrant à quatre membres successifs autorise une rotation autour d'un axe dit axe de rotation (Yf1, Yf2, Yf1).

8. Système robotisé (100) selon la revendication 7 dans lequel l'axe de rotation (Yf1, Yf2, Yf1) est parallèle au deuxième axe (Y21, Y22, Y23) et au troisième axe (Y31, Y32, Y33).

9. Système robotisé (100) selon la revendication 7 dans lequel l'articulation fin de quadrant (AQ1, AQ2, AQ3) du quadrant à quatre membres successifs (Q1, Q2, Q3) :
- est une liaison pivot liant le dernier membre dudit quadrant (Q1, Q2, Q3) et le torse (T2, T3, T1) du quadrant suivant (Q2, Q3, Q1), ou
- comporte une pièce auxiliaire, dite pré-torse, liée d'une part au dernier membre dudit quadrant (Q1, Q2, Q3) par une liaison pivot autorisant une rotation autour de l'axe de rotation (Yf1, Yf2, Yf3) et d'autre part au torse (T2, T3, T1) du quadrant suivant (Q2, Q3, Q1) par une liaison sans degré de liberté.

10. Système robotisé (100) selon la revendication 9 et la revendication 4 dans lequel, lorsqu'une articulation fin de quadrant (AQ1, AQ2, AQ3) d'un quadrant à quatre membres successifs comporte un pré-torse, ledit quadrant et le quadrant suivant sont configurés pour pouvoir être désolidarisés de manière réversible, au niveau de la liaison sans degré de liberté reliant le pré-torse au torse (T2, T3, T1) dudit quadrant suivant (Q2, Q3, Q1).

11. Système robotisé (100) selon l'une des revendications 1 à 6 dans lequel ledit au moins un quadrant à au moins quatre membres successifs comporte cinq membres successifs, dont :
- le torse (T1, T2, T3),
- l'épaule (E1, E2, E3), liée audit torse par la première articulation,
- le bras (B1, B2, B3), lié à ladite épaule par la deuxième articulation,
- l'avant-bras (AB1, AB2, AB3), lié audit bras par la troisième articulation,
- un cinquième et dernier membre, dit poignet (P1, P2, P3), lié à l'avant-bras par une articulation, dite quatrième articulation.

12. Système robotisé (100) selon la revendication 11 dans lequel :
- la troisième articulation autorise une rotation autour d'un axe dit troisième axe (Y31, Y32, Y33), ledit troisième axe étant parallèle audit deuxième axe (Y21,Y22, Y23),
- la quatrième articulation autorisant une rotation autour d'un axe dit quatrième axe (Y41, Y42, Y43), ledit quatrième axe étant parallèle audit deuxième axe (Y21, Y22, Y23) et audit troisième axe (Y31, Y32, Y33).

13. Système robotisé (100) selon l'une des revendications 11 à 12 dans lequel l'articulation fin de quadrant dudit quadrant à cinq membres successifs autorise une rotation autour d'un axe dit axe de rotation (Yf1, Yf2, Yf3).

14. Système robotisé (100) selon la revendication 13 dans lequel, l'axe de rotation (Yf1, Yf2, Yf1) de l'articulation fin de quadrant (AQ1, AQ2, AQ3) dudit quadrant à cinq membres successifs est parallèle au premier axe (Z11, Z12, Z13) de la première articulation du quadrant suivant (Q2, Q3, Q1).

## Patentansprüche

1. Mobiles Robotersystem (100), das imstande ist, sich zu bewegen, N Gelenkstrukturen beinhaltet, die paarweise in Reihe miteinander verbunden sind, um eine Schleife zu bilden, wobei N eine positive ganze Zahl größer oder gleich 3 ist,
wobei jede Gelenkstruktur, Quadrant (Q1, Q2, Q3) genannt, beinhaltet:
- mindestens zwei aufeinanderfolgende Glieder, darunter ein erstes, Torso (T1, T2, T3) genanntes Glied, und ein letztes Glied, wobei zwei aufeinanderfolgende Glieder des Quadranten durch ein Gelenk miteinander verbunden sind, das mindestens eine Drehung um eine Achse ermöglicht, und
- ein Quadrantendgelenk (AQ1, AQ2, AQ3) genannte Gelenk,
wobei das Quadrantendgelenk eines Quadranten das letzte Glied des Quadranten mit dem Torso des nächsten Quadranten verbindet,
mindestens ein Quadrant des Robotersystems mindestens vier aufeinanderfolgende Glieder beinhaltet, darunter:
- den Torso (T1, T2, T3),
- ein zweites, Schulter (E1, E2, E3) genanntes Glied, das durch ein erstes Gelenk genanntes Gelenk mit dem Torso verbunden ist, das eine Drehung um eine erste Achse (Z11, Z12, Z13) genannte Achse ermöglicht,
- ein Arm (B1, B2, B3) genanntes drittes Glied, das durch ein zweites Gelenk genanntes Gelenk mit der Schulter verbunden ist, das eine Drehung um eine zweite Achse (Y21, Y22, Y23) genannte Achse ermöglicht, wobei die zweite Achse orthogonal zu der ersten Achse ist,
- ein viertes, Unterarm (AB1, AB2, AB3) genanntes Glied, das durch ein drittes Gelenk genanntes Gelenk mit dem Arm verbunden ist, das eine Drehung um eine dritte Achse (Y31, Y32, Y33) genannte Achse ermöglicht, wobei die dritte Achse parallel zu der zweiten Achse (Y21, Y22, Y23) ist,
wobei das Robotersystem (100) Betätigungsmittel beinhaltet, die konfiguriert sind, um alle oder einen Teil der Gelenke der Quadranten in Bewegung zu versetzen, **dadurch gekennzeichnet, dass** die Betätigungsmittel für jedes der Gelenke, die das Robotersystem bilden, einen zugehörigen Motor beinhalten.

2. Robotersystem (100) nach Anspruch 1, das keinen zentralen Körper beinhaltet, mit dem sich jeder Quadrant verbindet.

3. Robotersystem (100) nach einem der Ansprüche 1 bis 2, wobei mindestens ein Quadrant (Q1, Q2, Q3) ein Auflageteil (PA1, PA2, PA3) beinhaltet, das dazu bestimmt ist, mit einer Auflagefläche in Kontakt zu kommen.

4. Robotersystem (100) nach einem der Ansprüche 1 bis 3, das mindestens eine Verriegelungs-/Entriegelungsvorrichtung beinhaltet, die konfiguriert ist, um zwei aufeinanderfolgende Quadranten reversibel zu lösen.

5. Robotersystem (100) nach einem der Ansprüche 1 bis 4, das im Bereich von mindestens einem Quadranten (Q1, Q2, Q3) einen Verbinder beinhaltet, der mit einem der Glieder des Quadranten reversibel oder nicht reversibel verbunden ist und konfiguriert ist, um mindestens ein Werkzeug aufzunehmen.

6. Robotersystem (100) nach einem der Ansprüche 1 bis 5, wobei, wenn mindestens ein anderer Quadrant nur drei aufeinanderfolgende Glieder beinhaltet, der Arm das letzte Glied ist und das Quadrantendgelenk des anderen Quadranten eine Kugelgelenkverbindung ist.

7. Robotersystem (100) nach einem der Ansprüche 1 bis 6, wobei das Quadrantendgelenk des Quadranten mit vier aufeinanderfolgenden Gliedern eine Drehung um eine Drehachse (Yf1, Yf2, Yf1) genannte Achse ermöglicht.

8. Robotersystem (100) nach Anspruch 7, wobei die Drehachse (Yf1, Yf2, Yf1) parallel zur zweiten Achse (Y21, Y22, Y23) und zur dritten Achse (Y31, Y32, Y33) verläuft.

9. Robotersystem (100) nach Anspruch 7, wobei das Quadrantendgelenk (AQ1, AQ2, AQ3) des Quadranten mit vier aufeinanderfolgenden Gliedern (Q1, Q2, Q3):
- eine Schwenkverbindung ist, die das letzte Glied des Quadranten (Q1, Q2, Q3) und den Torso (T2, T3, T1) des nächsten Quadranten (Q2, Q3, Q1) verbindet, oder
- ein Vortorso genanntes Hilfsteil beinhaltet, das einerseits durch eine Schwenkverbindung, die eine Drehung um die Drehachse (Yf1, Yf2, Yf3) ermöglicht, mit dem letzten Glied des Quadranten (Q1, Q2, Q3), und andererseits durch eine Verbindung ohne Freiheitsgrad mit dem Torso (T2, T3, T1) des nächsten Quadranten (Q2, Q3, Q1) verbunden ist.

10. Robotersystem (100) nach Anspruch 9 und Anspruch 4, wobei, wenn ein Quadrantendgelenk (AQ1, AQ2, AQ3) eines Quadranten mit vier aufeinanderfolgenden Gliedern einen Vortorso beinhaltet, der Quadrant und der nächste Quadrant konfiguriert sind, um im Bereich der Verbindung ohne Freiheitsgrad, die den Vortorso mit dem Torso (T2, T3, T1) des nächsten Quadranten (Q2, Q3, Q1) verbindet, reversibel gelöst zu werden.

11. Robotersystem (100) nach einem der Ansprüche 1 bis 6, wobei der mindestens eine Quadrant mit mindestens vier aufeinanderfolgenden Gliedern fünf aufeinanderfolgende Glieder beinhaltet, darunter:
- den Torso (T1, T2, T3),
- die Schulter (E1, E2, E3), die durch das erste Gelenk mit dem Torso verbunden ist,
- den Arm (B1, B2, B3), der durch das zweite Gelenk mit der Schulter verbunden ist,
- den Unterarm (AB1, AB2, AB3), der durch das dritte Gelenk mit dem Arm verbunden ist,
- ein fünftes und letztes, Handgelenk (P1, P2, P3) genanntes Glied, das durch ein viertes Gelenk genanntes Gelenk mit dem Unterarm verbunden ist.

12. Robotersystem (100) nach Anspruch 11, wobei:
- das dritte Gelenk eine Drehung um eine dritte Achse (Y31, Y32, Y33) genannte Achse ermöglicht, wobei die dritte Achse parallel zur zweiten Achse (Y21, Y22, Y23) verläuft,
- das vierte Gelenk, das eine Drehung um eine vierte Achse (Y41, Y42, Y43) genannte Achse ermöglicht, wobei die vierte Achse parallel zur zweiten Achse (Y21, Y22, Y23) und zur dritten Achse (Y31, Y32, Y33) verläuft.

13. Robotersystem (100) nach einem der Ansprüche 11 bis 12, wobei das Quadrantendgelenk des Quadranten mit vier aufeinanderfolgenden Gliedern eine Drehung um eine Drehachse (Yf1, Yf2, Yf3) genannte Achse ermöglicht.

14. Robotersystem (100) nach Anspruch 13, wobei die Drehachse (Yf1, Yf2, Yf1) des Quadrantendgelenks (AQ1, AQ2, AQ3) des Quadranten mit fünf aufeinanderfolgenden Gliedern parallel zur ersten Achse (Z11, Z12, Z13) des ersten Gelenks des nächsten Quadranten (Q2, Q3, Q1) verläuft.

## Claims

1. Mobile robotic system (100), capable of moving, including N articulated structures connected to one another pairwise in series so as to form a loop, N being a positive integer greater than or equal to 3,
each articulated structure, also called quadrant (Q1, Q2, Q3), including:
- at least two successive limbs, including a first limb, also called torso (T1, T2, T3), and a last limb, two successive limbs of the quadrant being connected to one another by a joint enabling at least one rotation about an axis, and
- a joint, also called quadrant end joint (AQ1, AQ2, AQ3),
the quadrant end joint of a quadrant linking the last limb of said quadrant to the torso of the next quadrant,
at least one quadrant of the robotic system includes at least four successive limbs, including:
- the torso (T1, T2, T3),
- a second limb, also called shoulder (E1, E2, E3), linked to said torso by a joint, also called first joint, enabling a rotation about an axis, also called first axis (Z11, Z12, Z13),
- a third limb, also called arm (B1, B2, B3), linked to said shoulder by a joint, also called second joint, enabling a rotation about an axis, also called second axis (Y21, Y22, Y23), the second axis being orthogonal to said first axis,
- a fourth limb, also called forearm (AB1, AB2, AB3), linked to said arm by a joint, also called third joint, enabling a rotation about an axis also called third axis (Y31, Y32, Y33), said third axis being parallel to said second axis (Y21, Y22, Y23),
the robotic system (100) including actuating means configured to move all or part of the joints of the quadrants,
**characterized in that** the actuating means include, for each of the joints forming the robotic system, an associated motor.

2. Robotic system (100) according to claim 1, including no central body on which each quadrant is linked.

3. Robotic system (100) according to one of claims 1 to 2, wherein at least one quadrant (Q1, Q2, Q3) includes a bearing part (PA1, PA2, PA3) intended to come into contact with a bearing surface.

4. Robotic system (100) according to one of claims 1 to 3, including at least one locking/unlocking device configured to reversibly detach two successive quadrants.

5. Robotic system (100) according to one of claims 1 to 4, including, at at least one quadrant (Q1, Q2, Q3), a connector linked, reversibly or not, to one of the limbs of said quadrant, and configured to receive at least one tool.

6. Robotic system (100) according to one of claims 1 to 5, wherein, when at least another quadrant includes only three successive limbs, the arm is the last limb and the quadrant end joint of said another quadrant is a ball joint connection.

7. Robotic system (100) according to one of claims 1 to 6, wherein the quadrant end joint of said quadrant with four successive limbs enables a rotation about an axis also called axis of rotation (Yf1, Yf2, Yf1).

8. Robotic system (100) according to claim 7, wherein the axis of rotation (Yf1, Yf2, Yf1) is parallel to the second axis (Y21, Y22, Y23) and the third axis (Y31, Y32, Y33).

9. Robotic system (100) according to claim 7, wherein the quadrant end joint (AQ1, AQ2, AQ3) of the quadrant with four successive limbs (Q1, Q2, Q3):
- is a pivot connection linking the last limb of said quadrant (Q1, Q2, Q3) and the torso (T2, T3, T1) of the next quadrant (Q2, Q3, Q1), or
- includes an auxiliary part, also called pre-torso, linked, on the one hand, to the last limb of said quadrant (Q1, Q2, Q3) by a pivot connection enabling a rotation about the axis of rotation (Yf1, Yf2, Yf3) and, on the other hand, to the torso (T2, T3, T1) of the next quadrant (Q2, Q3, Q1) by a connection with no degrees of freedom.

10. Robotic system (100) according to claim 9 and claim 4, wherein, when a quadrant end joint (AQ1, AQ2, AQ3) of a quadrant with four successive limbs includes a pre-torso, said quadrant and the next quadrant are configured so as to be able to be reversibly detached, at the connection with no degrees of freedom linking the pre-torso to the torso (T2, T3, T1) of said next quadrant (Q2, Q3, Q1).

11. Robotic system (100) according to one of claims 1 to 6, wherein said at least one quadrant with at least four successive limbs includes five successive limbs, including:
- the torso (T1, T2, T3),
- the shoulder (E1, E2, E3), linked to said torso by the first joint,
- the arm (B1, B2, B3), linked to said shoulder by the second joint,
- the forearm (AB1, AB2, AB3), linked to said arm by a joint, also called third joint,
- a fifth and last limb, also called wrist (P1 P2, P3), linked to the forearm by a joint, also called fourth joint.

12. Robotic system (100) according to claim 11, wherein:
- the third joint enables a rotation about an axis also called third axis (Y31, Y32, Y33), said third axis being parallel to said second axis (Y21, Y22, Y23),
- the fourth joint enabling a rotation about an axis also called fourth axis (Y41, Y4, Y43), said fourth axis being parallel to said second axis (Y21, Y22, Y23) and to said third axis (Y31, Y32, Y33).

13. Robotic system (100) according to one of claims 11 to 12, wherein the quadrant end joint of said quadrant with five successive limbs enables a rotation about an axis also called axis of rotation (Yf1, Yf2, Yf3).

14. Robotic system (100) according to claim 13 wherein, the axis of rotation Yf1, Yf2, Yf3) of the quadrant end joint (AQ1, AQ2, AQ3) of said quadrant with five successive limbs is parallel to the first axis (Z11, Z12, Z13) of the first joint of the next quadrant (Q2, Q3, Q1).
